(19) Europäisches Patentamt / European Patent Office / Office européen des brevets

(11) **EP 4 478 026 A1**

(12) **EUROPEAN PATENT APPLICATION**
published in accordance with Art. 153(4) EPC

(43) Date of publication:
**18.12.2024 Bulletin 2024/51**

(21) Application number: **22933667.2**

(22) Date of filing: **20.12.2022**

(51) International Patent Classification (IPC):
*G01N 3/28* (2006.01)        *B21D 22/00* (2006.01)
*G01N 3/08* (2006.01)        *G01N 17/00* (2006.01)

(52) Cooperative Patent Classification (CPC):
**B21D 22/00; G01N 3/08; G01N 3/28; G01N 17/00**

(86) International application number:
**PCT/JP2022/046835**

(87) International publication number:
**WO 2023/181539 (28.09.2023 Gazette 2023/39)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **24.03.2022 JP 2022047849**
**01.11.2022 JP 2022175330**

(71) Applicant: **JFE Steel Corporation**
**Tokyo 100-0011 (JP)**

(72) Inventors:
• **TATSUKAWA, Koji**
**Tokyo 100-0011 (JP)**
• **MINOTE, Toru**
**Tokyo 100-0011 (JP)**
• **ISHIWATARI, Akinobu**
**Tokyo 100-0011 (JP)**

(74) Representative: **Hoffmann Eitle**
**Patent- und Rechtsanwälte PartmbB**
**Arabellastraße 30**
**81925 München (DE)**

(54) **METHOD, DEVICE, AND PROGRAM FOR PREDICTING DELAYED FRACTURE IN PRESS-FORMED ARTICLE, AND METHOD FOR MANUFACTURING PRESS-FORMED ARTICLE**

(57) A method for predicting delayed fracture in a press formed part according to the present invention includes a step (S1) of calculating stress distribution and strain distribution in the press formed part, a step (S5) of setting a hydrogen concentration distribution corresponding to the strain distribution calculated for the press formed part based on a relation between strain and hydrogen concentration acquired in advance for a high strength steel sheet, a step (S7) of performing hydrogen diffusion analysis for the press formed part based on the stress distribution and the hydrogen concentration distribution to calculate hydrogen concentration distribution after hydrogen diffusion, and a step (S9) of predicting a region where delayed fracture occurs in the press formed part, based on the stress distribution, the strain distribution, the hydrogen concentration distribution after hydrogen diffusion, and a delayed fracture judgment condition acquired in advance based on stress, strain, and hydrogen concentration.

FIG.1

**Description**

Field

The present invention relates to a method, device, and program for predicting delayed fracture in a press formed part by which occurrence of delayed fracture in a press formed part using a high strength steel sheet is predicted. Furthermore, the present invention relates to a method of manufacturing a press formed part by which a press forming condition is determined to suppress delayed fracture based on a result of prediction of occurrence of delayed fracture.

Background

In response to stricter environmental regulations on carbon dioxide emissions and the like, weight reduction of an automotive body for the purpose of improving fuel efficiency is required. Meanwhile, the automotive body is also required to improve collision safety. In response to these needs, a high strength steel sheet having a tensile strength of 1 GPa or more is increasingly applied to body frame parts of automobiles. The body frame parts of the automobiles are generally manufactured by press forming. A press formed part using a high strength steel sheet having a tensile strength exceeding 980 MPa gives concern about occurrence of delayed fracture due to strain or residual stress that is generated between a press forming step and a parts assembly step, and due to hydrogen that has penetrated during manufacture or use of the automobiles.

Therefore, some evaluation methods have been proposed to evaluate delayed fracture characteristics according to manufacturing conditions for the body frame parts of the automobiles manufactured using the high strength steel sheet. For example, Patent Literature 1 discloses an evaluation method to evaluate delayed fracture characteristics of a test specimen of a high strength steel sheet subjected to deep drawing under a hydrogen penetration environment, depending on a situation of a crack generated in a flange portion of the test specimen. In addition, Patent Literature 2 discloses an evaluation method to evaluate hydrogen embrittlement characteristics (delayed fracture characteristics) of a test specimen of a steel material that is subjected to plastic strain and to which hydrogen is introduced, based on a plastic strain quantity. Furthermore, Patent Literature 3 discloses an evaluation method that uses a relationship between a hydrogen quantity and residual stress in a steel material upon occurrence of delayed fracture, and strain in crystal grains in a metal structure, and obtains a hydrogen quantity corresponding to the strain in crystal grains in a structure of a previously selected region to be evaluated of a formed steel sheet to evaluate delayed fracture characteristics at the region to be evaluated.

Citation List

Patent Literature

    Patent Literature 1: JP 2019-174124 A
    Patent Literature 2: JP 2020-41838 A
    Patent Literature 3: JP 2011-33600 A

Summary

Technical Problem

The method disclosed in Patent Literature 1 evaluates a maximum residual stress that causes the delayed fracture occurs in the flange portion of the test specimen of the high strength steel sheet subjected to deep drawing, without consideration of influence of strain caused by the occurrence of delayed fracture. In addition, the method disclosed in Patent Literature 2 evaluates a difference in the delayed fracture characteristics (hydrogen embrittlement characteristics) of the steel material based on the plastic strain quantity, without consideration of the influence of stress distribution or hydrogen concentration distribution on the occurrence of delayed fracture in the press formed part. Furthermore, in the evaluation method disclosed in Patent Literature 3, the region to be evaluated for evaluation of the delayed fracture characteristics in the formed steel sheet is selected, the residual stress, the strain in the crystal grains, and the hydrogen quantity in the region to be evaluated are measured, and the strain in the crystal grains, the residual stress, and the hydrogen quantity are used as judgment conditions for the occurrence of delayed fracture. However, a large part such as the press formed part requires considerable time and cost to measure the strain in the crystal grains and the hydrogen quantity of the entire press formed part.

Each of the methods disclosed in Patent Literature 1 and Patent Literature 3 actually performs a delayed fracture test for the steel sheet subjected to press forming to evaluate the delayed fracture characteristics in a specific portion of the press-formed steel sheet based on a result of the delayed fracture test. For this reason, it takes considerable time and cost, and it is difficult to predict whether which part of the press formed part that is obtained after press forming or parts assembly has a risk of occurrence of delayed fracture. Therefore, it has been difficult to manufacture a press formed part under a press forming condition of suppressing the occurrence of delayed fracture in the press formed part.

The present invention has been made to solve the above problems, and an object of the present invention is to provide a method, device, and program for predicting delayed fracture in a press formed part that enable prediction of a region where delayed fracture occurs without performing a delayed fracture test for a press formed part formed by using a high strength steel sheet. Furthermore, another object of the present invention is to provide a method of manufacturing a press formed part to determine a press forming condition so as not to cause delayed fracture in a region where occurrence of the delayed fracture is predicted by the above method and manufacture the press formed part under the determined press forming condition.

Solution to Problem

A method for predicting delayed fracture in a press formed part according to the present invention predicts a region where delayed fracture occurs in the press formed part made of high strength steel sheet, and includes: a stress distribution and strain distribution calculation step of calculating stress distribution and strain distribution in the press formed part; a hydrogen concentration distribution setting step of setting hydrogen concentration distribution corresponding to the strain distribution in the press formed part calculated in the stress distribution and strain distribution calculation step, based on a relation between strain and hydrogen concentration acquired in advance for the high strength steel sheet; a hydrogen diffusion analysis step of performing hydrogen diffusion analysis for the press formed part, based on the stress distribution calculated in the stress distribution and strain distribution calculation step and the hydrogen concentration distribution set in the hydrogen concentration distribution setting step, and calculating hydrogen concentration distribution after hydrogen diffusion; and a delayed fracture region prediction step of predicting the region where delayed fracture occurs in the press formed part, based on a delayed fracture judgment condition based on stress, strain, and hydrogen concentration acquired in advance, the stress distribution and strain distribution in the press formed part calculated in the stress distribution and strain distribution calculation step, and the hydrogen concentration distribution after hydrogen diffusion calculated in the hydrogen diffusion analysis step.

In the stress distribution and strain distribution calculation step, equivalent plastic strain distribution may be calculated as the strain distribution, and in the hydrogen concentration distribution setting step, a relation between equivalent plastic strain and hydrogen concentration may be acquired in advance, and hydrogen concentration distribution corresponding to the equivalent plastic strain distribution may be set based on the acquired relation between equivalent plastic strain distribution and hydrogen concentration.

In the hydrogen concentration distribution setting step, a relation between hydrostatic stress and hydrogen concentration in the high strength steel sheet may be acquired in advance, hydrostatic stress distribution may be calculated from the stress distribution in the press formed part calculated in the stress distribution and strain distribution calculation step, hydrogen concentration distribution corresponding to the hydrostatic stress distribution may be calculated based on the relation between hydrostatic stress and hydrogen concentration, and the calculated hydrogen concentration distribution corresponding to the hydrostatic stress distribution may be added to the hydrogen concentration distribution corresponding to the strain distribution in the press formed part calculated in the stress distribution and strain distribution calculation step.

The high strength steel sheet may have a tensile strength of 1 GPa or more.

A device for predicting delayed fracture in a press formed part according to the present invention predicts a region where delayed fracture occurs in the press formed part made of high strength steel sheet, and includes: a stress distribution and strain distribution calculation unit configured to calculate stress distribution and strain distribution in the press formed part; a hydrogen concentration distribution setting unit configured to set hydrogen concentration distribution corresponding to the strain distribution in the press formed part calculated by the stress distribution and strain distribution calculation unit, based on a relation between strain and hydrogen concentration acquired in advance for the high strength steel sheet; a hydrogen diffusion analysis unit configured to perform hydrogen diffusion analysis for the press formed part, based on the stress distribution calculated by the stress distribution and strain distribution calculation unit and the hydrogen concentration distribution set by the hydrogen concentration distribution setting unit, and calculate hydrogen concentration distribution after hydrogen diffusion; and a delayed fracture region prediction unit configured to predict the region where delayed fracture occurs in the press formed part, based on a delayed fracture judgment condition based on stress, strain, and hydrogen concentration acquired in advance, the stress distribution and strain distribution in the press formed part calculated by the stress distribution and strain distribution calculation unit, and the hydrogen concentration distribution after hydrogen diffusion calculated by the hydrogen diffusion analysis unit.

The stress distribution and strain distribution calculation unit may be configured to calculate equivalent plastic strain distribution as the strain distribution, and the hydrogen concentration distribution setting unit may be configured to acquire a relation between equivalent plastic strain and hydrogen concentration in advance, and set hydrogen concentration distribution corresponding to the equivalent plastic strain distribution based on the acquired relation between equivalent plastic strain distribution and hydrogen concentration.

The hydrogen concentration distribution setting unit may be configured to acquire a relation between hydrostatic stress and hydrogen concentration in the high strength steel sheet in advance, hydrostatic stress distribution is calculated from the stress distribution in the press formed part calculated by the stress distribution and strain distribution calculation unit, hydrogen concentration distribution corresponding to the hydrostatic stress distribution may be calculated based on the relation between hydrostatic stress and hydrogen concentration, and the calculated hydrogen concentration distribution corresponding to the hydrostatic stress distribution may be added to the hydrogen concentration distribution corresponding to the strain distribution in the press formed part calculated by the stress distribution and strain distribution calculation unit.

A program for predicting delayed fracture in a press formed part according to the present invention predicts a region where delayed fracture occurs in the press formed part made of high strength steel sheet, and causes a computer to function as: a stress distribution and strain distribution calculation unit configured to calculate stress distribution and strain distribution in the press formed part; a hydrogen concentration distribution setting unit configured to set hydrogen concentration distribution corresponding to the strain distribution in the press formed part calculated by the stress distribution and strain distribution calculation unit, based on a relation between strain and hydrogen concentration acquired in advance for the high strength steel sheet; a hydrogen diffusion analysis unit configured to perform hydrogen diffusion analysis for the press formed part, based on the stress distribution calculated by the stress distribution and strain distribution calculation unit and the hydrogen concentration distribution set by the hydrogen concentration distribution setting unit, and calculate hydrogen concentration distribution after hydrogen diffusion; and a delayed fracture region prediction unit configured to predict the region where delayed fracture occurs in the press formed part, based on a delayed fracture judgment condition acquired in advance based on stress, strain, and hydrogen concentration, the stress distribution and strain distribution in the press formed part calculated by the stress distribution and strain distribution calculation unit, and the hydrogen concentration distribution after hydrogen diffusion calculated by the hydrogen diffusion analysis unit.

The stress distribution and strain distribution calculation unit may be configured to calculate equivalent plastic strain distribution as the strain distribution, and the hydrogen concentration distribution setting unit may be configured to acquire a relation between equivalent plastic strain and hydrogen concentration in advance, and set hydrogen concentration distribution corresponding to the equivalent plastic strain distribution based on the acquired relation between equivalent plastic strain distribution and hydrogen concentration.

The hydrogen concentration distribution setting unit may be configured to acquire a relation between hydrostatic stress and hydrogen concentration in the high strength steel sheet in advance, hydrostatic stress distribution may be calculated from the stress distribution in the press formed part calculated by the stress distribution and strain distribution calculation unit, hydrogen concentration distribution corresponding to the hydrostatic stress distribution may be calculated based on the relation between hydrostatic stress and hydrogen concentration, and the calculated hydrogen concentration distribution corresponding to the hydrostatic stress distribution may be added to the hydrogen concentration distribution corresponding to the strain distribution in the press formed part calculated by the stress distribution and strain distribution calculation unit.

A method of manufacturing a press formed part according to the present invention suppresses occurrence of delayed fracture in the press formed part formed by using a high strength steel sheet to manufacture the press formed part, and includes: a tentative press forming condition setting step of setting a tentative press forming condition for the press formed part; a delayed fracture occurrence judgment step of predicting a region where delayed fracture occurs by the method for predicting delayed fracture in a press formed part according to claim 1, based on the tentative press forming condition, and judging presence or absence of occurrence of delayed fracture in the press formed part based on a result of the prediction; a tentative press forming condition changing step of changing the tentative press forming condition when occurrence of the delayed fracture in the press formed part is judged in the delayed fracture occurrence judgment step; a repeating step of repeatedly performing the tentative press forming condition changing step and the delayed fracture occurrence judgment step, until it is judged that there is no occurrence of delayed fracture in the press formed part in the delayed fracture occurrence judgment step; a press forming condition determination step of determining the tentative press forming condition upon judgment of no occurrence of delayed fracture in the press formed part in the delayed fracture occurrence judgment step, as a press forming condition; and a press forming step of performing press forming of the high strength steel sheet into the press formed part under the determined press forming condition.

Advantageous Effects of Invention

According to the invention, it is possible to predict whether the delayed fracture occurs during the use of the press formed part made of high strength steel sheet. As a result, not only whether the delayed fracture occurs in the press formed part but also a region where delayed fracture occurs can be predicted in a design stage of parts, and it is possible to take measures against the delayed fracture, such as changing the shape of the part or a press forming step so as not to cause the delayed fracture.

Furthermore, in the present invention, the presence or absence of occurrence of the delayed fracture in the press formed part made of high strength steel sheet is judged, and the press forming condition to suppress occurrence of the delayed fracture is determined based on a result of the judgment. This configuration makes it possible to reduce a period for determining the press forming condition enabling to suppress the occurrence of delayed fracture in the press formed part formed by using the high strength steel sheet. In addition, press forming of the press formed part under the press forming condition determined in this way makes it possible to manufacture the press formed part for which measures against the occurrence of delayed fracture are taken.

Brief Description of Drawings

FIG. 1 is a flowchart illustrating a flow of a process of a method for prediction of occurrence of delayed fracture in a press formed part made of high strength steel sheet according to a first embodiment of the present invention.

FIG. 2 is diagrams illustrating a result of study of correspondence between a broken region and hydrogen concentration distribution in a tensile test specimen made of high strength steel sheet ((a) tensile test specimen, (b) broken region, (c) hydrogen concentration distribution).

FIG. 3 is graphs illustrating relationships between strain and hydrogen concentration obtained by a hydrogen charging test with test specimens strained in various deformation modes immersed for an immersion time of 30 hours ((a) relationship between equivalent plastic strain and hydrogen concentration and (b) relationship between strain mode and hydrogen concentration).

FIG. 4 is a graph illustrating a relationship between equivalent plastic strain and hydrogen concentration in a constant load hydrogen charging test with the tensile test specimen immersed for an immersion time of 30 hours.

FIG. 5 is graphs illustrating delayed fracture judgment conditions displayed in graphs of stress and equivalent plastic strain in a delayed fracture test with delayed fracture test specimens immersed for immersion times of 30 hours and 20 hours.

FIG. 6 is a graph illustrating relationships between hydrogen concentration and equivalent plastic strain of the delayed fracture test specimens measured in the delayed fracture test with the delayed fracture test specimens immersed for immersion times of 30 hours, 20 hours, and 10 hours.

FIG. 7 is a graph illustrating delayed fracture judgment conditions under constant stress conditions (1100 MPa, 1000 MPa, and 900 MPa) obtained from results of the delayed fracture test.

FIG. 8 is a diagram illustrating a configuration of a device and program for predicting delayed fracture in a press formed part according to the first embodiment of the present invention.

FIG. 9 illustrates views of a press formed part as a target for delayed fracture prediction in a first example ((a) perspective view and (b) cross-sectional view).

FIG. 10 is contour diagrams of stress distribution and equivalent plastic strain distribution both calculated for the press formed part in the first example ((a) longitudinal stress distribution and (b) equivalent plastic strain distribution).

FIG. 11 is contour diagrams of hydrogen concentration distributions before hydrogen diffusion, calculated for the press formed part in the first example ((a) hydrogen concentration distribution corresponding to equivalent plastic strain (Case 1), (b) hydrogen concentration distribution corresponding to hydrostatic stress, and (c) hydrogen concentration distribution corresponding to the hydrostatic stress and the equivalent plastic strain (Case 2)).

FIG. 12 is contour diagrams of hydrogen concentration distributions after the hydrogen diffusion, calculated for the press formed part in the first example ((a) hydrogen concentration distribution corresponding to equivalent plastic strain (Case 1) and (b) hydrogen concentration distribution corresponding to hydrostatic stress and equivalent plastic strain (Case 2)).

FIG. 13 is graphs illustrating results of prediction of regions where delayed fracture occurs in the press formed part in the first example.

FIG. 14 is a flowchart illustrating a process of a method of manufacturing a press formed part according to a second embodiment of the present invention.

FIG. 15 is a graph illustrating a result of prediction of a region where delayed fracture occurs in a press formed part in a second example.

Description of Embodiments

<Background of invention>

The inventors considered the use of a delayed fracture test for the high strength steel sheet under uniaxial tensile stress, for a method of predicting a region where delayed fracture occurs in a press formed part made of high strength steel sheet.

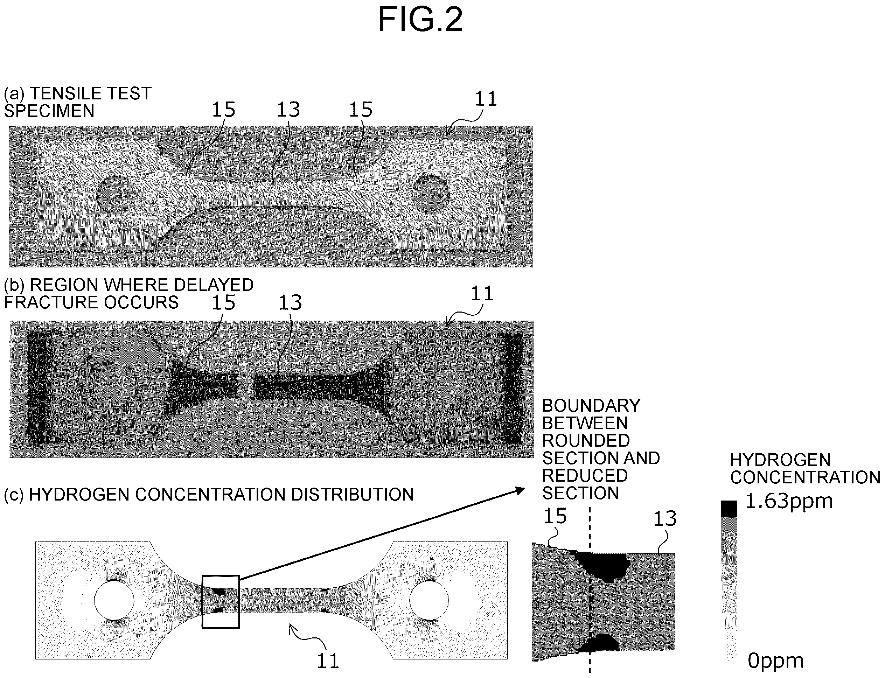

First, a hydrogen charging test was performed in which a tensile test specimen 11 was formed by using a high strength steel sheet illustrated in FIG. 2(a) as a sample, and the tensile test specimen 11 was placed in a hydrogen penetration environment for a certain period of time, under a constant load of uniaxial tensile stress, to measure a hydrogen quantity in the tensile test specimen 11. Furthermore, a uniaxial tensile test in which the tensile test specimen 11 was held until occurrence of breakage (delayed fracture) was performed (hereinafter, referred to as a constant load hydrogen charging test).

In a normal uniaxial tensile test in which the constant load is applied to the tensile test specimen 11 not placed in the hydrogen penetration environment, breakage occurs near the center of a reduced section 13 in the tensile test specimen 11. However, in the tensile test specimen 11 subjected to the constant load hydrogen charging test, breakage occurred not in the vicinity of the center of the reduced section 13 but at a boundary between the reduced section 13 and a rounded section 15 (shoulder portion), as illustrated in FIG. 2(b).

The inventors considered that hydrogen concentration distribution in the tensile test specimen 11 is related to this factor, and conducted hydrogen diffusion analysis in consideration of hydrostatic pressure distribution to examine the correspondence between the broken region in the tensile test specimen 11 and the hydrogen concentration distribution after hydrogen diffusion.

FIG. 2(c) illustrates a result of the hydrogen concentration distribution after hydrogen diffusion, obtained by the hydrogen diffusion analysis. In the tensile test specimen 11, it is found that hydrogen is concentrated at the boundaries between the rounded sections 15 and the reduced section 13 due to the distribution of the hydrostatic pressure and a region having a higher hydrogen concentration corresponds to the broken region (see FIG. 2(b)). From this result, it has been concluded that it is important to consider the hydrogen concentration distribution after hydrogen diffusion, for the prediction of delayed fracture.

Subsequently, for predicting the occurrence of delayed fracture in the press formed part, a relationship between the hydrogen quantity penetrating the press formed part and strain of the press formed part was also examined repeatedly. In press forming of the high strength steel sheet, there are various deformation modes, such as bending (plane strain), bulge forming (biaxial tension), and uniaxial tension, for the press formed part. Therefore, test specimens that were subjected to strain in various deformation modes such as rolling (plane strain), uniaxial tension, uniaxial compression, and biaxial tension-compression, were prepared with a high strength steel sheet (e.g., 1470 MPa cold rolled steel sheet (sheet thickness of 1.2 mm)) as a sample. Then, the test specimens that were subjected to strain were placed in the hydrogen penetration environment for the certain period of time, and then the hydrogen charging test was performed to measure the hydrogen quantities in the test specimens.

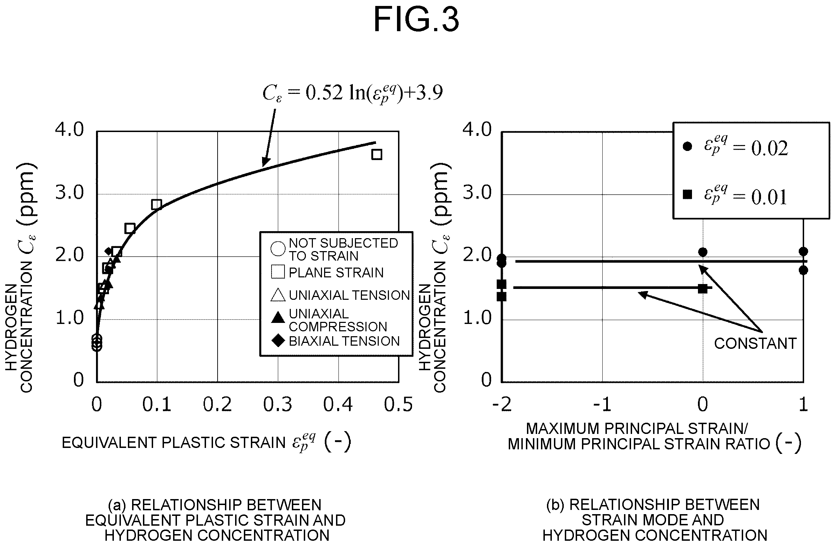

FIG. 3 illustrates, as a representative example, an example of results of measurement of the hydrogen quantities in the test specimens, summarized in relationships between hydrogen concentrations and strains. The hydrogen quantities in the test specimens was measured by immersing the test specimens that have been subjected to strain in various deformation modes in a mixture of ammonium thiocyanate and McIlvaine buffer solution with pH = 4.0 and 0.1% concentration, for 30 hours. FIG. 3(a) illustrates a relationship between equivalent plastic strain $\varepsilon_p^{eq}$ applied to the test specimens and the hydrogen concentrations, and FIG. 3(b) illustrates a relationship between the deformation modes and the hydrogen concentrations when the equivalent plastic strain $\varepsilon_p^{eq}$ applied to the test specimens is constant (=0.01 and 0.02). In FIG. 3(b), in a correspondence between a ratio (hereinafter referred to as "strain ratio") of maximum principal strain and minimum principal strain in, and each deformation mode, a strain ratio of 1 represents biaxial tension, a strain ratio of 0 represents plane strain, and a strain ratio of -2 represents uniaxial tension and uniaxial compression.

Based on the results illustrated in FIG. 3, the inventors have found that the hydrogen concentration only depends on the equivalent plastic strain $\varepsilon_p^{eq}$ regardless of the deformation modes. It is considered that the reason why the hydrogen concentration increases with the increase of the equivalent plastic strain is that the hydrogen quantity penetrating steel increases due to the increase of defects in the test specimen in which hydrogen is trapped with the increase of the equivalent plastic strain. From the result illustrated in FIG. 3(a), the relationship between the hydrogen quantity penetrating the press formed part and the strain in the press formed part is represented as, for example, a relation of the equivalent plastic strain, as illustrated in Formula (1).

$$C_c = a \cdot \ln\left(\varepsilon_p^{eq}\right) + b \qquad \cdots (1)$$

Here, $C_\varepsilon$ is the hydrogen concentration (ppm) when the strain is applied, $\varepsilon_p^{eq}$ is the equivalent plastic strain, and a and b are constants.

In addition, in the constant load hydrogen charging test, a relationship between the hydrogen quantity penetrating the press formed part and the stress distribution in the press formed part was also examined repeatedly. Hydrostatic stress is generated in the vicinities of the boundaries between the rounded sections 15 and the reduced section 13 where the breakage occurs in the tensile test specimen 11. The hydrostatic stress represents average stress defined by an average of normal stress in three directions acting on a surface of an object. It is considered that when the hydrostatic stress in the tensile direction is generated, a crystal lattice in the steel is opened, the hydrogen quantity forming a solid solution in a crystal lattice increases, and the hydrogen quantity penetrating the steel is increased.

Therefore, in a representative example of the constant load hydrogen charging test, a high strength steel sheet (e.g., 1470 MPa cold rolled steel sheet having a sheet thickness of 1.2 mm) used as a material, was immersed in the mixture of ammonium thiocyanate and McIlvaine buffer solution with pH = 4.0 and 0.1% concentration, for 30 hours, while applying a constant uniaxial tensile stress (900 MPa, 600 MPa, and 300 MPa, or 300 MPa, 200 MPa, and 100 MPa in terms of hydrostatic stress) in a longitudinal direction of the reduced section 13 of the tensile test specimen 11, and the hydrogen quantity in the reduced section 13 of the tensile test specimen 11 was measured.

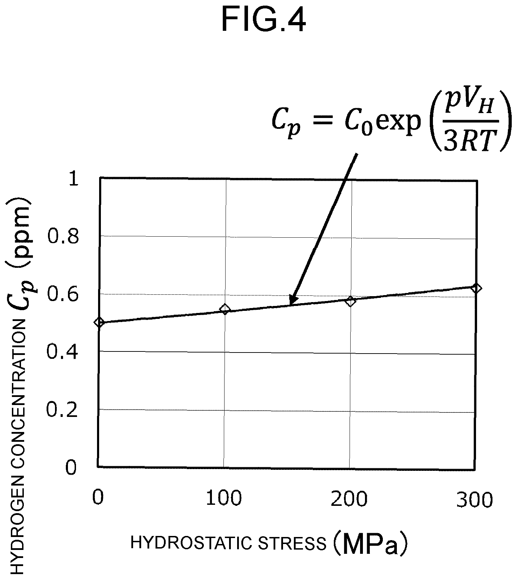

FIG. 4 illustrates a summarized result of a relationship between hydrogen concentration and hydrostatic stress. Based on this result, a relationship between hydrostatic stress and hydrogen quantity (hydrogen concentration) penetrating steel is represented by, for example, a relationship between hydrogen concentration $C_p$ forming a solid solution between crystal lattices and tensile hydrostatic stress p, as in Formula (2). A quantity $\Delta C_p$ of increase in hydrogen concentration $C_p$ when the stress is applied is represented by Formula (3).

$$C_p = C_0 \exp\left(\frac{pV_H}{3RT}\right) \qquad \cdots (2)$$

$$\Delta C_p = C_0\left\{\exp\left(\frac{pV_H}{3RT}\right) - 1\right\} \qquad \cdots (3)$$

Here, $C_p$ is the hydrogen concentration (ppm) when stress is applied, $C_0$ is a hydrogen concentration (= 0.55 ppm) when no stress is applied, $\Delta C_p$ is the quantity (ppm) of increase in the hydrogen concentration $C_p$ when stress is loaded, p is hydrostatic stress (MPa), $V_H$ is a change in molar volume of hydrogen (= 2.0 cm$^3$) in steel, R is a gas constant (= 8.31 N·m·K$^{-1}$·mol$^{-1}$), and T is temperature (=300 K) .

Furthermore, excluding environmental factors such as temperature, it was considered that the residual stress is important as factors related to the delayed fracture in the press formed part, in addition to the hydrogen quantity and strain in the press formed part, as described above, and that the delayed fracture occurs when the hydrogen quantity, strain, and stress satisfy certain conditions.

Therefore, a test (hereinafter, referred to as the delayed fracture test) was performed in which a tensile test specimen was formed by using, as a sample, high strength steel sheet (e.g., 1470 MPa cold rolled steel sheet having a sheet thickness of 1.2 mm) to which rolling strain (equivalent plastic strain) was applied, the tensile test specimen was immersed for a predetermined time in the mixture of ammonium thiocyanate and McIlvaine buffer solution with pH = 4.0 and 0.1% concentration, under a constant load of uniaxial tensile stress to change the level of the hydrogen quantity penetrating the tensile test specimen, and the presence or absence of breakage in the tensile test specimen was evaluated.

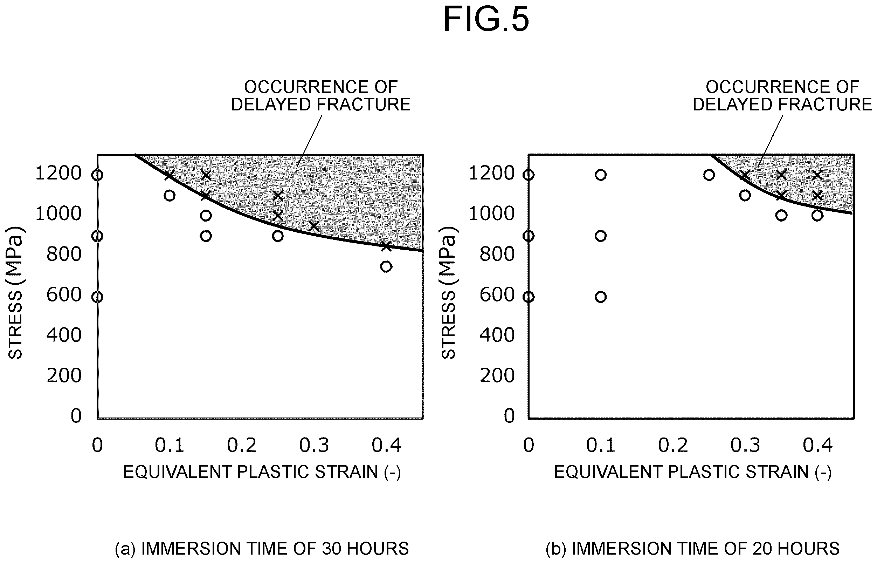

FIG. 5 illustrates delayed fracture judgment conditions obtained from results of the delayed fracture test. FIG. 5 illustrates an example of the delayed fracture judgment conditions shown in graphs of stress and equivalent plastic strain where immersion times are 30 hours and 20 hours. In FIG. 5, o indicates a result of plotting the equivalent plastic strain and stress of a test specimen having no delayed fracture, and × indicates a result of plotting the equivalent plastic strain and stress of a test specimen having delayed fracture. Then, based on the results of the delayed fracture test, the delayed fracture judgment conditions given by relationships between the equivalent plastic strain and the stress illustrated in FIG. 5 were derived. A region where the equivalent plastic strain and the stress are higher than those of the delayed fracture judgment conditions (a gray region in the drawing) is a region indicating occurrence of the delayed fracture in the tensile test specimen. Furthermore, in the results illustrated in FIG. 5, lower stress and lower equivalent plastic strain cause breakage in the immersion time of 30 hours as compared with the immersion time of 20 hours, and different delayed fracture judgment conditions are given depending on the immersion time.

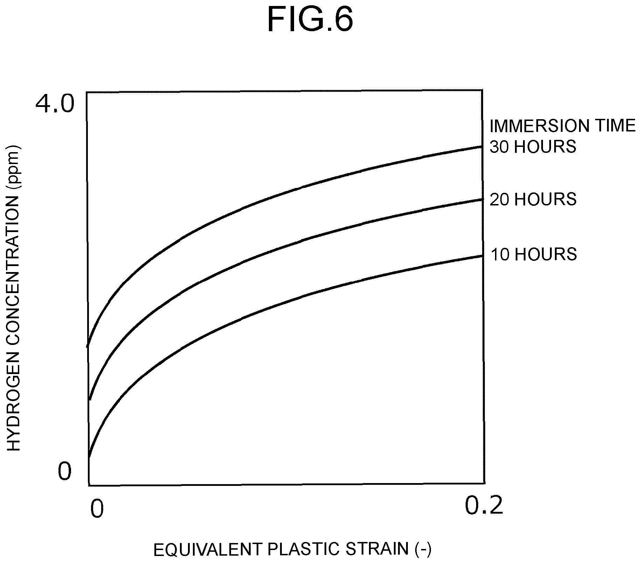

FIG. 6 illustrates relationships between hydrogen concentration and equivalent plastic strain where the hydrogen quantity was measured after immersion in the mixture of ammonium thiocyanate and McIlvaine buffer solution with pH = 4.0 and 0.1% concentration for a predetermined time (30 hours, 20 hours, and 10 hours). As illustrated in FIG. 6, it can be seen that the hydrogen concentration is higher as the immersion time is longer, under the same conditions of stress and strain. From this result, it is supposed that the longer immersion time, that is, the higher hydrogen concentration is a factor for lowering the stress and equivalent plastic strain that cause the breakage (delayed fracture), in the delayed fracture judgment conditions illustrated in FIG. 5.

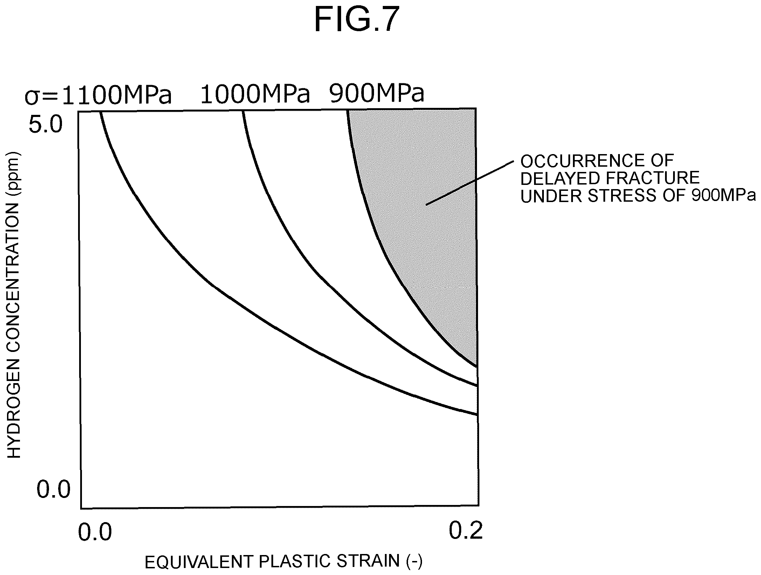

FIG. 7 illustrates delayed fracture judgment conditions (critical values of equivalent plastic strain and hydrogen concentration that cause delayed fracture) under the constant stress conditions (1100 MPa, 1000 MPa, and 900 MPa) obtained from the results of the delayed fracture test. It can be seen that the higher the hydrogen concentration, the lower the stress and strain that cause breakage.

In this way, based on the results illustrated in FIGS. 4 to 7, the inventors have reached the conclusion that it is effective to accurately predict not only stress distribution and strain distribution but also hydrogen concentration distribution in the press formed part in order to accurately judge whether the delayed fracture occurs in which region in the press formed part formed by using high strength steel sheet.

Furthermore, the inventors have considered that when the region where delayed fracture occurs is predicted based on the stress distribution, the strain distribution, and the hydrogen concentration distribution in the press formed part, the press formed part is preferably manufactured to have stress and strain that cause no occurrence of delayed fracture is predicted in the region. It has been concluded that to manufacture the press formed part having the stress and strain at which no occurrence of delayed fracture is predicted, repetition of the change of a press forming condition and prediction of the occurrence of the delayed fracture in the press formed part under the changed press forming condition makes it possible to determine the press forming condition to have stress and strain at which no occurrence of the delayed fracture is predicted. Then, it has been found that performing press forming under the press forming conditions determined in this manner makes it possible to manufacture the press formed part for which measures are taken for suppressing occurrence of delayed fracture is taken.

The present invention has been made based on the results of the examinations, and first and second embodiments of the present invention will be described below.

[First Embodiment]

<Method for predicting delayed fracture in press formed part>

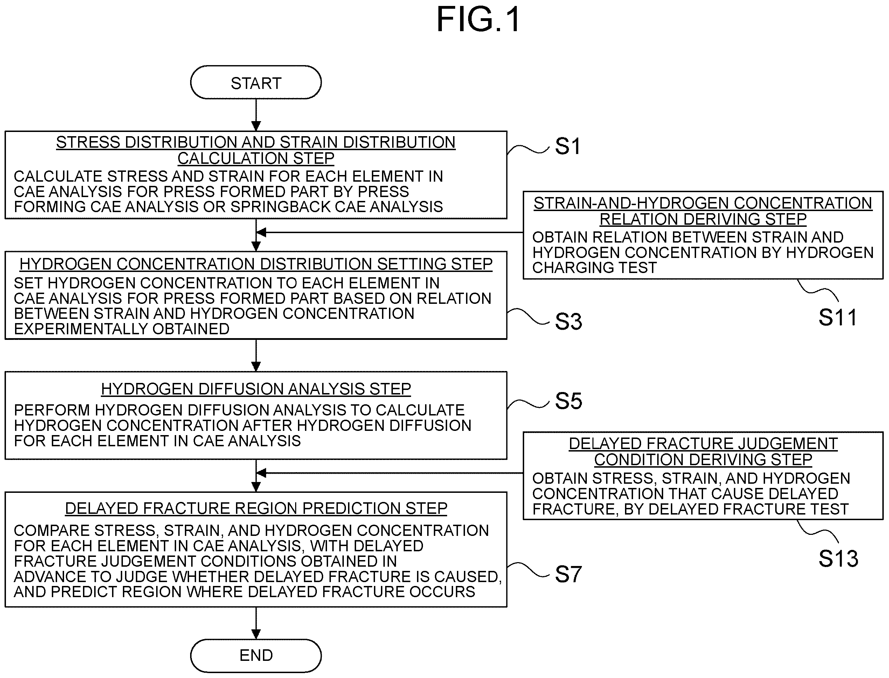

The method for predicting delayed fracture in a press formed part according to the first embodiment of the present invention is configured to predict a region where delayed fracture occurs in a press formed part made of high strength steel sheet. As illustrated in FIG. 1, in an example, the method for predicting delayed fracture in a press formed part includes a stress distribution and strain distribution calculation step S1, a hydrogen concentration distribution setting step S3, a hydrogen diffusion analysis step S5, and a delayed fracture region prediction step S7. Each of the above steps will be described below.

<<Stress distribution and strain distribution calculation step>>

The stress distribution and strain distribution calculation step S1 is a step to calculate the stress distribution and strain distribution in a press formed part. In the present first embodiment, the stress distribution and strain distribution calculation step S1 calculates stress and strain for each element in CAE analysis for the press formed part to calculate the stress distribution and strain distribution in the press formed part.

For calculation of the stress distribution and strain distribution in the press formed part, a computer aided engineering (CAE) analysis method generally used in automobile design or the like can be applied. Examples of the CAE analysis method include press forming CAE analysis, shearing CAE analysis such as cutting-out, trimming, or piercing of a sheet before press forming, springback CAE analysis for a press formed part, assembling CAE analysis for a press formed part, and the like. Then, obtaining the stress and strain for each element in CAE for the press formed part by CAE analysis using a finite element method makes it possible to calculate the stress distribution and strain distribution in the press formed part.

<<Hydrogen concentration distribution setting step>>

The hydrogen concentration distribution setting step S3 is a step to set hydrogen concentration distribution corresponding to the strain distribution in the press formed part calculated in the stress distribution and strain distribution calculation step S1 based on a relation between strain and hydrogen concentration acquired in advance for the high strength steel sheet.

In the present first embodiment, as illustrated in FIG. 1, a strain-and-hydrogen concentration relation deriving step S11 is performed prior to the hydrogen concentration distribution setting step S3 to derive the relation (Formula (1) described above) between strain and hydrogen concentration in the high strength steel sheet used for press forming of the press formed part. Then, based on the derived Formula (1), the hydrogen concentration corresponding to the strain (equivalent plastic strain) calculated for each element in CAE for the press formed part in the stress distribution and strain distribution calculation step S1 is obtained for each element in CAE to set the hydrogen concentration distribution.

In addition, in the hydrogen concentration distribution setting step S3, the hydrogen concentration distribution in the press formed part may be set by acquiring in advance a relation (Formula (3) described above) between hydrostatic stress and hydrogen concentration in the high strength steel sheet used for press forming of the press formed part, calculating hydrostatic stress distribution based on the stress distribution in the press formed part calculated in the stress distribution and strain distribution calculation step S1, calculating the hydrogen concentration distribution corresponding to the hydrostatic stress distribution based on the acquired relation (Formula (3) described above) between hydrostatic stress and hydrogen concentration, and adding the hydrogen concentration distribution corresponding to the hydrostatic stress distribution, to the hydrogen concentration distribution corresponding to the strain (equivalent plastic strain) distribution calculated based on the above Formula (1) in the stress distribution and strain distribution calculation step S1.

(Strain-and-hydrogen concentration relation deriving step)

The strain-and-hydrogen concentration relation deriving step S11 is a step to experimentally obtain the relation between strain and hydrogen concentration in the high strength steel sheet used for press forming by the hydrogen charging test.

In the relationship between hydrogen concentration and strain in the high strength steel sheet, as illustrated above in FIG. 3, the hydrogen concentration depends only on the equivalent plastic strain regardless of the deformation mode. Therefore, in the hydrogen concentration distribution setting step S3, strain in the relation between strain and hydrogen concentration is preferably equivalent plastic strain, and for example, a relation between equivalent plastic strain and hydrogen concentration represented by the above Formula (1) is preferably derived.

The constants a and b in Formula (1) can be obtained by performing a general hydrogen charging test.

FIG. 3(a) illustrates results of the measurement of the equivalent plastic strain and the hydrogen concentration that were obtained by the hydrogen charging test, and the results of the relation between the equivalent plastic strain and the hydrogen concentration (a = 0.52 and b = 3.9) that were derived from the results of the measurement.

<<Hydrogen diffusion analysis step>>

The hydrogen diffusion analysis step S5 is a step to perform hydrogen diffusion analysis for the press formed part, based on the stress distribution calculated in the stress distribution and strain distribution calculation step S1 and the hydrogen concentration distribution set in the hydrogen concentration distribution setting step S3 to calculate the hydrogen concentration distribution after the hydrogen diffusion. Hydrogen in the press formed part diffuses according to a hydrogen concentration gradient and a hydrostatic stress gradient. Therefore, in order to accurately predict hydrogen concentration distribution in the press formed part, it is necessary to redistribute hydrogen of the elements in CAE for the press formed part by solving a diffusion equation shown in Formula (4).

$$J = -D\left(\frac{\partial c}{\partial x_i} + s\kappa_p \frac{\partial p}{\partial x_i}\right) \qquad \cdots (4)$$

Here, $x_i$ represents an in-plane direction of the press formed part, J represents a concentration flux, D represents a diffusion coefficient, s represents solubility, $\kappa_p$ represents a coefficient representing stress dependency, c represents a hydrogen concentration, p represents hydrostatic stress, and, on the right side, the first term represents a hydrogen concentration gradient and the second term represents dependency of the hydrostatic stress gradient on hydrogen diffusion.

When the press formed part has stress concentration, solving Formula (2) in the hydrogen diffusion analysis step S5, the hydrogen concentration when hydrogen accumulates at a stress concentration region can be accurately predicted.

<<Delayed fracture region prediction step>>

The delayed fracture region prediction step S7 is a step to predict the region where delayed fracture occurs in the press formed part, based on the delayed fracture judgment conditions based on the stress, strain, and hydrogen concentration acquired in advance, the stress distribution and strain distribution in the press formed part calculated in the stress distribution and strain distribution calculation step S1, and the hydrogen concentration distribution after hydrogen diffusion calculated in the hydrogen diffusion analysis step S5.

In the present first embodiment, the delayed fracture region prediction step S7 uses the delayed fracture judgment conditions through which it is judged whether delayed fracture is caused by a relationship between the stress, the strain, and the hydrogen concentration after hydrogen diffusion, for each element in CAE for the press formed part. Then, as illustrated in FIG. 1, the delayed fracture judgment conditions are acquired by performing a delayed fracture judgment condition deriving step S13 prior to the delayed fracture region prediction step S7.

(Delayed fracture judgment condition deriving step)

The delayed fracture judgment condition deriving step S13 is a step to perform the delayed fracture test for the high strength steel sheet used for press forming and derive the relationship between the stress, the strain, and the hydrogen concentration that causes the delayed fracture, as the delayed fracture judgment conditions.

In the delayed fracture judgment condition deriving step S13, a delayed fracture test specimen is prepared using a material in which equivalent plastic strain is imparted to the high strength steel sheet by rolling or the like, and the delayed fracture test is performed for the delayed fracture test specimens, with the levels of uniaxial tensile stress and hydrogen quantity (change of immersion time in acidic solution) changed. Then, a relationship between the presence or absence of breakage in the delayed fracture test specimen, the stress, the equivalent plastic strain, and the hydrogen concentration in the tensile test specimen (hydrogen quantity penetrating steel) is obtained, and the delayed fracture judgment conditions are derived. The delayed fracture judgment conditions derived in the delayed fracture judgment condition deriving step S13 has three variables of equivalent plastic strain, stress, and hydrogen concentration, as illustrated in FIG. 7.

As described above, according to the method for predicting delayed fracture in a press formed part according to the present first embodiment, it is possible to predict whether the delayed fracture occurs during the use of the press formed part made of high strength steel sheet. As a result, not only whether the delayed fracture occurs in the press formed part but also a region where delayed fracture occurs can be predicted in a design stage of parts, and it is possible to take measures against the delayed fracture, such as changing the shape of the part or a press forming step so as not to cause the delayed fracture.

<Delayed fracture occurrence prediction device for press formed part>

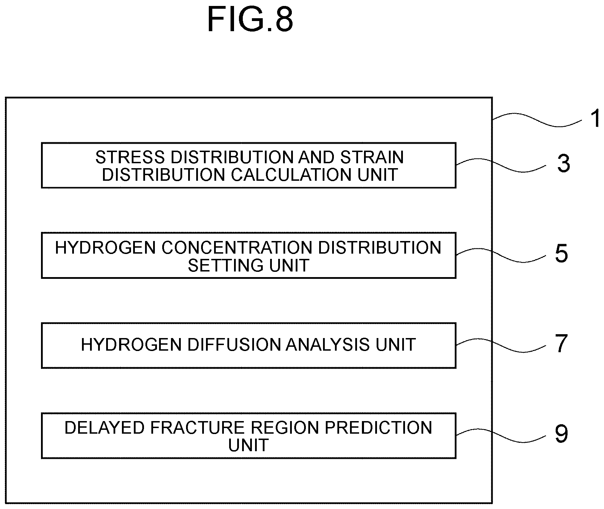

A device 1 for predicting delayed fracture in a press formed part (hereinafter, referred to as a "delayed fracture prediction device 1") according to the first embodiment of the present invention is configured to predict the region where delayed fracture occurs in the press formed part made of high strength steel sheet. As illustrated in FIG. 8, the delayed fracture prediction device 1 includes a stress distribution and strain distribution calculation unit 3, a hydrogen concentration distribution setting unit 5, a hydrogen diffusion analysis unit 7, and a delayed fracture region prediction unit 9. The delayed fracture prediction device 1 may be configured by a central processing unit (CPU) of a computer (PC or the like). In this configuration, each of the above units functions when the CPU of the computer executes a predetermined program.

<<Stress distribution and strain distribution calculation unit>>

The stress distribution and strain distribution calculation unit 3 is configured to calculate the stress distribution and strain distribution in the press formed part. In the present first embodiment, the stress distribution and strain distribution calculation unit 3 calculates stress and strain for each element in CAE analysis for the press formed part to calculate the stress distribution and strain distribution in the press formed part.

In the calculation of the stress distribution and the strain distribution in the press formed part by the stress distribution and strain distribution calculation unit 3, press forming CAE analysis, shearing CAE analysis such as cutting-out, trimming, or piercing of a sheet before press forming, springback CAE analysis for a press formed part, assembling CAE analysis for a press formed part, or the like can be applied.

<<Hydrogen concentration distribution setting unit>>

The hydrogen concentration distribution setting unit 5 is configured to set hydrogen concentration distribution corresponding to the strain distribution in the press formed part calculated by the stress distribution and strain distribution calculation unit 3 based on the relation between strain and hydrogen concentration acquired in advance for the high strength steel sheet. In the present first embodiment, the hydrogen concentration distribution setting unit 5 sets the hydrogen concentration distribution in the press formed part by obtaining hydrogen concentration corresponding to strain (equivalent plastic strain) for each element in CAE analysis for the press formed part, based on the relation between equivalent plastic strain and hydrogen concentration (the above Formula (1)) acquired in advance for the high strength steel sheet.

In addition, the hydrogen concentration distribution setting unit 5 may acquire in advance the relation (Formula (3) described above) between hydrostatic stress and hydrogen concentration in the high strength steel sheet used for press forming of the press formed part, calculate the hydrostatic stress distribution based on the stress distribution in the press formed part calculated by the stress distribution and strain distribution calculation unit 3, calculate the hydrogen concentration distribution corresponding to the hydrostatic stress distribution based on the relation (Formula (3) described above) between hydrostatic stress and hydrogen concentration, add the hydrogen concentration distribution corresponding to the hydrostatic stress distribution, to the hydrogen concentration distribution corresponding to the strain distribution calculated by the stress distribution and strain distribution calculation unit to set the hydrogen concentration distribution in the press formed part.

<<Hydrogen diffusion analysis unit>>

The hydrogen diffusion analysis unit 7 is configured to perform hydrogen diffusion analysis for the press formed part, based on the stress distribution calculated by the stress distribution and strain distribution calculation unit 3 and the hydrogen concentration distribution set by the hydrogen concentration distribution setting unit 5 to calculate the hydrogen concentration distribution after the hydrogen diffusion. In the present first embodiment, the hydrogen diffusion analysis unit 7 calculates hydrogen concentration after hydrogen diffusion for each element in CAE analysis for the press formed part by solving the diffusion equation shown in Formula (4), based on the stress calculated by the stress distribution and strain distribution calculation unit 3 and the hydrogen concentration set by the hydrogen concentration distribution setting unit 5, and calculates the hydrogen concentration distribution after hydrogen diffusion for each element in CAE for the press formed part.

<<Delayed fracture region prediction unit>>

The delayed fracture region prediction unit 9 is configured to predict the region where delayed fracture occurs in the press formed part, based on the delayed fracture judgment conditions based on the stress, strain, and hydrogen concentration acquired in advance, the stress distribution and strain distribution in the press formed part calculated by the stress distribution and strain distribution calculation unit 3, and the hydrogen concentration distribution after hydrogen diffusion calculated by the hydrogen diffusion analysis unit 7.
In the present first embodiment, the delayed fracture region prediction unit 9 judges whether delayed fracture occurs for each element in CAE analysis, based on the delayed fracture judgment conditions having three variables of the equivalent plastic strain, stress, and hydrogen concentration illustrated in FIG. 7, and further based on the stress, equivalent plastic strain, and hydrogen concentration after hydrogen diffusion which are obtained for each element in CAE analysis for the press formed part, and predicts an element in CAE analysis in which occurrence of delayed fracture is judged, as the region where delayed fracture occurs in the press formed part.

<Delayed fracture occurrence prediction program for high strength steel sheet>

The first embodiment of the present invention can be configured as a program for predicting delayed fracture in a press formed part. In other words, the program for predicting delayed fracture in a press formed part according to the first embodiment of the present invention is configured to predict the region where delayed fracture occurs in the press formed part made of high strength steel sheet. As illustrated in FIG. 8, the program for predicting delayed fracture of a press formed part causes a computer to function as the stress distribution and strain distribution calculation unit 3, the hydrogen concentration distribution setting unit 5, the hydrogen diffusion analysis unit 7, and the delayed fracture region prediction unit 9.
As described above, also in the device and program for predicting delayed fracture in a press formed part according to the present first embodiment, it is possible to predict whether delayed fracture occurs during use of the press formed part made of high strength steel sheet, as in the method for predicting delayed fracture in a press formed part according to the present first embodiment described above. As a result, not only whether the delayed fracture occurs in the press formed part but also a region where delayed fracture occurs can be predicted in a design stage of parts, and it is possible to take measures against the delayed fracture, such as changing the shape of the part or a press forming step so as not to cause the delayed fracture.
Furthermore, in the method for predicting delayed fracture in a press formed part according to the present first embodiment, the strain-and-hydrogen concentration relation deriving step S11 has been performed to experimentally obtain the relation between strain and hydrogen concentration in the high strength steel sheet used for press forming, by the hydrogen charging test. However, the method for predicting delayed fracture in a press formed part according to the present invention is not limited to the method performing the strain-and-hydrogen concentration relation deriving step S11, and a method to acquire a relation between strain and hydrogen concentration derived from a high strength steel sheet of the same material (kind of steel and tensile strength) may be used.
In addition, the method for predicting delayed fracture in a press formed part according to the present first embodiment has experimentally derived the relationship between the stress, equivalent plastic strain, and hydrogen concentration that causes delayed fracture occurs, as the delayed fracture judgment conditions by performing the delayed fracture judgment condition deriving step S13. The method for predicting delayed fracture in a press formed part according to the present invention is not limited to the method performing the delayed fracture judgment condition deriving step S13, and a method to acquire delayed fracture judgment conditions derived from a high strength steel sheet of the same material (kind of steel type and tensile strength) may be used.

[Second Embodiment]

<Method of manufacturing press formed part>

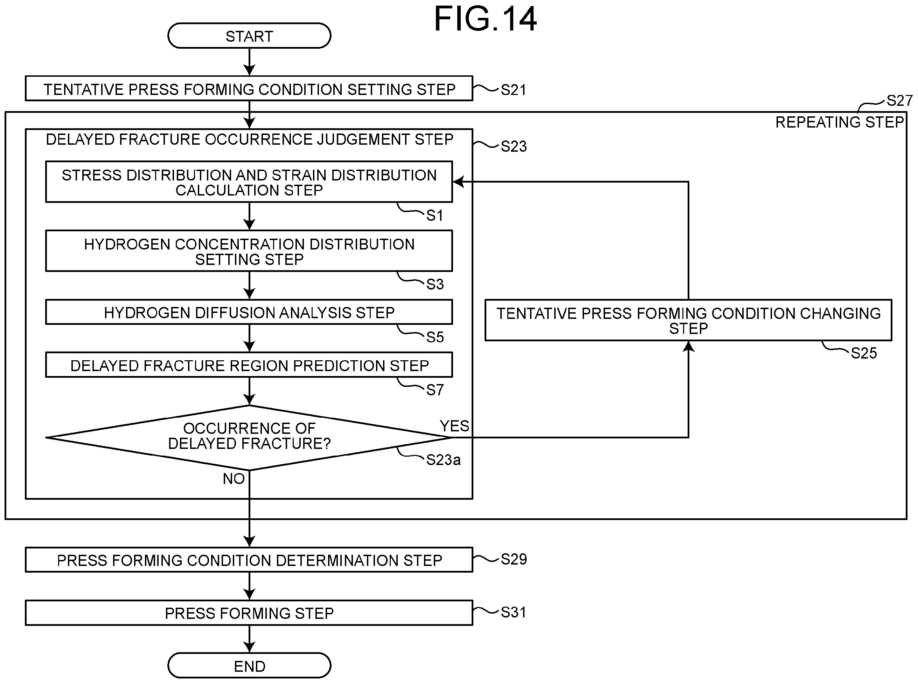

A method of manufacturing a press formed part according to the second embodiment of the present invention is configured to suppress occurrence of delayed fracture in the press formed part formed by using a high strength steel sheet to manufacture a press formed part. As illustrated in FIG. 14, the method of manufacturing a press formed part according to the present second embodiment includes a tentative press forming condition setting step S21, a delayed fracture occurrence judgment step S23, a tentative press forming condition changing step S25, and a repeating step S27. Furthermore, the method of manufacturing a press formed part according to the present second embodiment further includes a press forming condition determination step S29 and a press forming step S31.

<<Tentative press forming condition setting step>>

The tentative press forming condition setting step S21 is a step to set a tentative press forming condition for the press formed part. An example of the tentative press forming condition that is set in the tentative press forming condition setting step S21 includes bending R (radius of shoulder part of punch) of a bent portion, when a press formed part having the bent portion obtained by bending a steel sheet is a target. In addition, examples of the tentative press forming condition include a clearance between a punch and a die, a sheet thickness of a steel sheet, and the like. Furthermore, for a draw-bending method (stretch bending and bending and stretching), examples of the tentative press forming condition include a radius of a shoulder part of a die, a clearance of a side wall portion, blank holder pressure, and the like.

<<Delayed fracture occurrence judgment step>>

The delayed fracture occurrence judgment step S23 predicts a region where delayed fracture occurs by the above method for prediction of occurrence of delayed fracture in a press formed part according to the present invention, based on the tentative press forming condition set in the tentative press forming condition setting step S21. Furthermore, the delayed fracture occurrence judgment step S23 judges the presence or absence of occurrence of delayed fracture in the press formed part based on a result of the prediction of the region where delayed fracture occurs.

In the present second embodiment, as illustrated in FIG. 14, the delayed fracture occurrence judgment step S23 sequentially performs the stress distribution and strain distribution calculation step S1, the hydrogen concentration distribution setting step S3, the hydrogen diffusion analysis step S5, and the delayed fracture region prediction step S7.

The stress distribution and strain distribution calculation step S1, the hydrogen concentration distribution setting step S3, the hydrogen diffusion analysis step S5, and the delayed fracture region prediction step S7 are similar to those in the present first embodiment described above. However, in the stress distribution and strain distribution calculation step S1, press forming CAE analysis is performed using the tentative press forming condition set in the tentative press forming condition setting step S21 to calculate the stress distribution and strain distribution in the press formed part obtained by press forming under the tentative press forming condition. The shearing CAE analysis, springback CAE analysis, assembling CAE analysis for the press formed part, and the like are preferably performed as necessary.

Furthermore, the delayed fracture occurrence judgment step S23 judges the presence or absence of occurrence of delayed fracture in the press formed part obtained by press forming under the tentative press forming condition, based on the presence or absence of the region where occurrence of the delayed fracture is predicted in the delayed fracture region prediction step S7 (S23a). Specifically, in the delayed fracture region prediction step S7, it is judged whether the delayed fracture occurs for each element in CAE analysis for the press formed part. Then, when there is an element in CAE analysis in which occurrence of delayed fracture has been judged, it is judged that the press formed part has delayed fracture (S23a). On the other hand, when there is no element in CAE analysis in which occurrence of delayed fracture has been judged, it is judged that the press formed part has no delayed fracture (S23a).

<<Tentative press forming condition changing step>>

The tentative press forming condition changing step S25 is a step to change the tentative press forming condition when the occurrence of delayed fracture in the press formed part is judged in the delayed fracture occurrence judgment step S23. The tentative press forming condition is preferably changed to relax stress and strain in the region of the press formed part where occurrence of the delayed fracture is predicted in the delayed fracture region prediction step S7 so that, for example, the bending R of the bent portion subjected to bending is increased.

<<Repeating step>>

In the repeating step S27, the delayed fracture occurrence judgment step S23 and the tentative press forming condition changing step S25 are repeatedly performed under the changed tentative press forming condition. This repetition is performed until it is judged that there is no occurrence of delayed fracture in the delayed fracture occurrence judgment step S23. Therefore, when it is not judged that there is no occurrence of delayed fracture only by changing the tentative press forming condition once, the tentative press forming condition changing step S25 is also repeated.

<<Press forming condition determination step>>

The press forming condition determination step S29 is a step to determine the tentative press forming condition upon judgment of no occurrence of delayed fracture in the delayed fracture occurrence judgment step S23, as the press forming condition of the press formed part.

<<Press forming step>>

The press forming step S31 is a step to perform press forming of the high strength steel sheet into the press formed part under the press forming conditions determined in the press forming condition determination step S29.

As described above, in the method of manufacturing a press formed part according to the present second embodiment, the presence or absence of occurrence of the delayed fracture in the press formed part is judged based on the method for prediction of occurrence of delayed fracture in a press formed part according to the present invention, and the press forming condition to suppress occurrence of the delayed fracture is determined based on a result of the judgment. This configuration makes it possible to reduce a period for determining the press forming condition enabling to suppress the occurrence of delayed fracture in the press formed part formed by using the high strength steel sheet. In addition, press forming of the press formed part under the press forming condition determined in this way makes it possible to manufacture the press formed part for which measures against the occurrence of delayed fracture are taken.

The method for prediction of occurrence of delayed fracture in a press formed part and the method of manufacturing a press formed part according to the present invention are used for a high strength steel sheet, and particularly, can be preferably applied to a high strength steel sheet having a tensile strength of 1 GPa or more that gives concern about occurrence of delayed fracture.

Furthermore, the press formed part as a target of the present invention is not limited to a specific part, but can be preferably applied to a body frame part of an automotive body obtained by press forming, such as a center pillar or A-pillar lower of an automobile.

[First example]

Experiments and analysis that were conducted for confirming the functions and effects of the present invention will be described below.

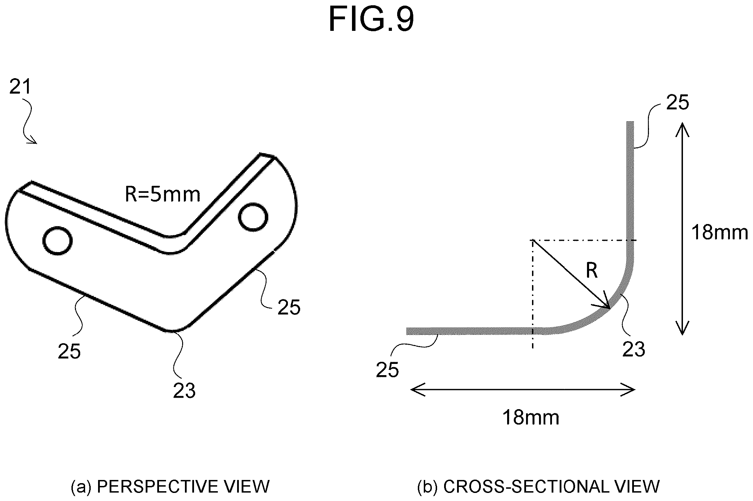

In the present first example, a region where delayed fracture occurs was predicted for a press formed part 21 illustrated in FIG. 9. The press formed part 21 is obtained by press forming of a 1470 MPa-class cold rolled steel sheet (sheet thickness of 1.2 mm) as the high strength steel sheet, and includes a bent portion 23 and shoulder portions 25 extending from both ends of the bent portion 23. The bent portion 23 has a curvature radius of 5 mm.

First, when the delayed fracture test for the press formed part 21 was performed, breakage (delayed fracture) occurred from a center portion in sheet thickness near the top of bending of the bent portion 23.

Subsequently, the region where delayed fracture occurs in the press formed part 21 was predicted by the method for predicting delayed fracture in a press formed part according to the present first embodiment described above.

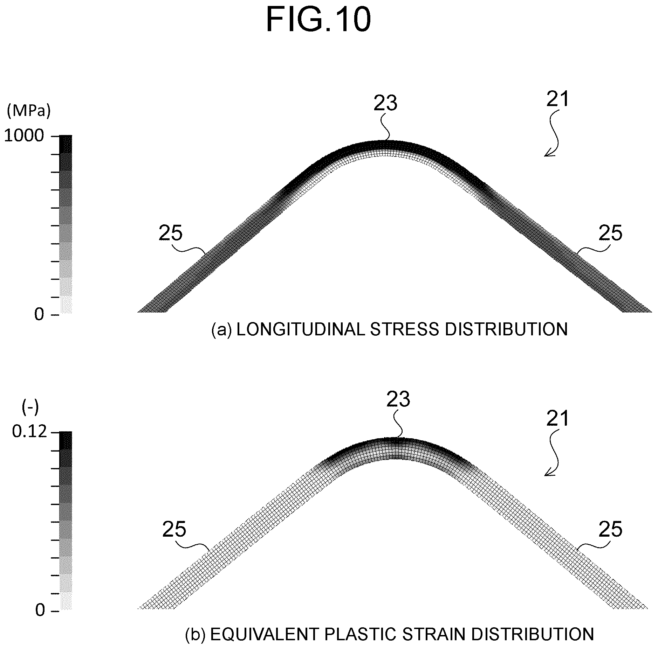

First, the press forming CAE analysis in the process of bending the 1470 MPa-class cold rolled steel sheet having a sheet thickness of 1.2 mm into the press formed part 21 was performed to calculate stress and equivalent plastic strain for each element in CAE analysis as the stress distribution and strain distribution of the press formed part 21, as illustrated in FIG. 10.

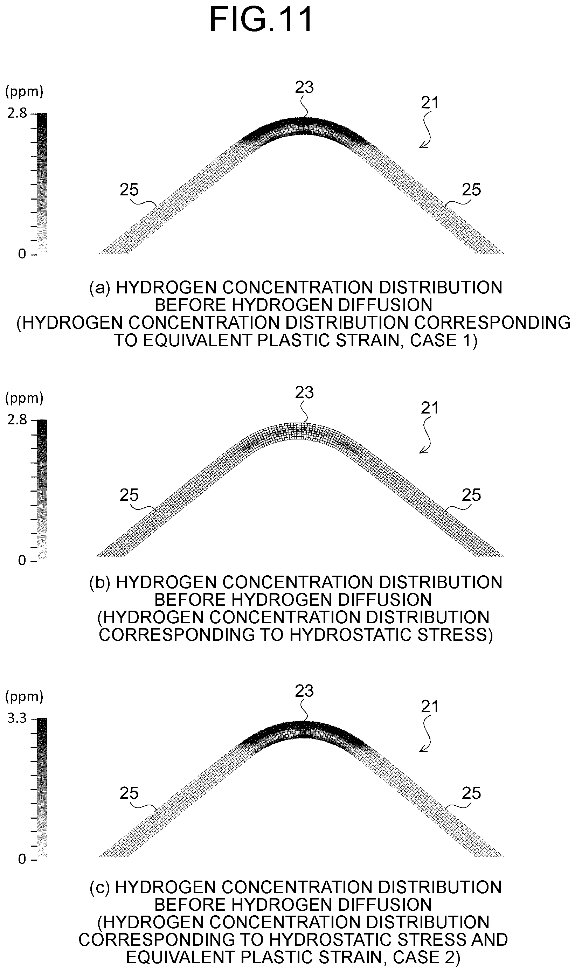

Next, as illustrated in FIG. 11(a), hydrogen concentration was set that is calculated as the hydrogen concentration distribution of the press formed part 21 corresponding to strain (equivalent plastic strain) and that corresponds to equivalent plastic strain of the elements in CAE analysis for the press formed part 21 is set, based on the relation between equivalent plastic strain and hydrogen concentration represented in the above Formula (1) (Case 1).

Furthermore, hydrostatic stress distribution was calculated based on the stress distribution of the press formed part 21, hydrogen concentration distribution corresponding to the hydrostatic stress was calculated as illustrated in FIG. 11(b) based on the relation between hydrostatic stress and hydrogen concentration represented in the above Formula (3), the hydrogen concentration distribution corresponding to the hydrostatic stress (FIG. 11(b)) corresponding to the hydrostatic stress distribution was added to the hydrogen concentration distribution (FIG. 11(a)) corresponding to the strain (equivalent plastic strain), the hydrogen concentration distribution corresponding to the hydrostatic stress distribution and the strain (equivalent plastic strain) distribution of the press formed part 21 was calculated as illustrated in FIG. 11(c), and the hydrogen concentration of the elements in CAE analysis for the press formed part 21 was set (Case 2).

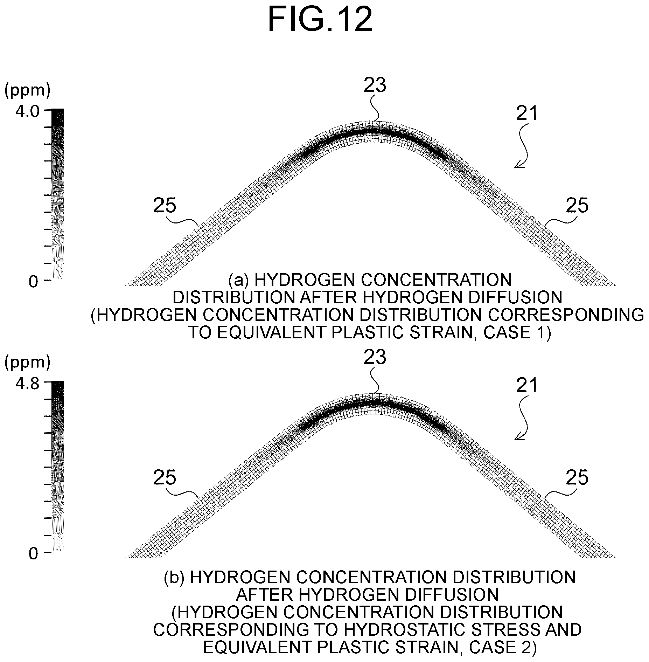

Next, for each of (Case 1) and (Case 2), hydrogen diffusion analysis was performed based on the stress and hydrogen concentration calculated for each element in CAE analysis for the press formed part 21, thereby calculating the hydrogen concentration after hydrogen diffusion for each element in CAE analysis, as the hydrogen concentration distribution after hydrogen diffusion, as illustrated in FIGS. 12(a) and (b), respectively.

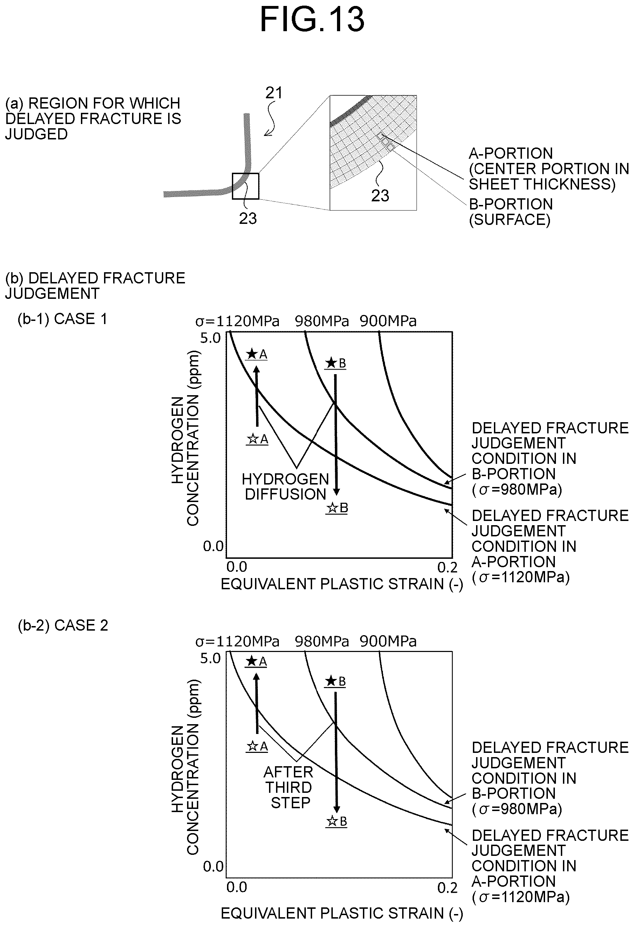

Then, the presence or absence of occurrence of delayed fracture was judged for each of the center portion in sheet thickness (A-portion in the drawing) and a surface (B-portion in the drawing) of the bent portion 23 illustrated in FIG. 13(a), based on the delayed fracture judgment conditions having three variables of the stress, the equivalent plastic strain, and the hydrogen concentration illustrated in the above FIG. 7 and the stress, equivalent plastic strain, and hydrogen concentration calculated for each element in CAE analysis for the press formed part.

The A-portion of the bent portion 23 has a stress of 1120 MPa, and therefore, a relationship between the equivalent plastic strain and the hydrogen concentration at $\sigma$ = 1120 MPa illustrated in FIG. 13(b) was used, as the delayed fracture judgment condition in the A-portion. Meanwhile, the B-portion of the bent portion 23 has a stress of 980 MPa, and therefore, a relationship between the equivalent plastic strain and the hydrogen concentration at $\sigma$ = 980 MPa illustrated in FIG. 13(b) was used, as the delayed fracture judgment condition in the B-portion.

Table 1 shows hydrogen concentrations in the A-portion and the B-portion in (Case 1) and (Case 2). Considering the hydrogen concentration distribution corresponding to the hydrostatic stress distribution and the strain (equivalent plastic strain) distribution in (Case 2), the hydrogen concentration increases by +13.6% at the maximum (after hydrogen diffusion in B-portion) and by +7.7% on average, compared with that in (Case 1).

Table 1

| Bent portion 23 | Equivalent plastic strain | Stress (MPa) | Hydrogen concentration (ppm) | | | |
| | | | (Case 1) | | (Case 2) | |
| | | | Before hydrogen diffusion | After hydrogen diffusion | Before hydrogen diffusion | After hydrogen diffusion |
| Center portion in sheet thickness (A-portion) | 0.023 | 1120 | 2.7 | 4.5 | 2.9 (+9.4%) | 4.8 (+6.7%) |
| Surface (B-portion) | 0.092 | 980 | 4.3 | 1.1 | 4.4 (+1.2%) | 1.3 (+13.6%) |

First, when hydrogen concentration before the hydrogen diffusion analysis was used in judgment of the delayed fracture in the A-portion in (Case 1), the hydrogen concentration before the hydrogen diffusion analysis (*A in the drawing) was lower than the hydrogen concentration at the equal equivalent plastic strain under a breakage judgment condition $\sigma$ = 1120 MPa, and therefore, occurrence of no breakage was judged, as illustrated in FIG. 13(b-1). However, hydrogen concentration (*A in the drawing) after the hydrogen diffusion analysis was higher than the hydrogen concentration as the breakage judgment condition, and therefore, occurrence of breakage was judged.

Next, when hydrogen concentration before the hydrogen diffusion analysis was used in judgment of the delayed fracture in the B-portion of the bent portion 23 in (Case 1), the hydrogen concentration before the hydrogen diffusion analysis (*B in the figure) was higher than the hydrogen concentration at the equal equivalent plastic strain under a breakage judgment condition $\sigma$=980 MPa, and therefore, occurrence of breakage was judged, as illustrated in FIG. 13 (b-1). However, hydrogen concentration (☆B in the drawing) after the hydrogen diffusion analysis was lower than the hydrogen concentration as the breakage judgment condition, and therefore, occurrence of no breakage was judged.

When hydrogen concentration before the hydrogen diffusion analysis was used in judgment of the delayed fracture in the A-portion in (Case 2), the hydrogen concentration before the hydrogen diffusion analysis (☆A in the drawing) was lower than the hydrogen concentration at the equal equivalent plastic strain under the breakage judgment condition $\sigma$ = 1120 MPa, and therefore, occurrence of no breakage was judged, as illustrated in FIG. 13(b-2). However, hydrogen concentration (*A in the drawing) after the hydrogen diffusion analysis was higher than the hydrogen concentration as the breakage judgment condition, and therefore, occurrence of breakage was judged.

When hydrogen concentration before the hydrogen diffusion analysis was used in judgment of the delayed fracture in the B-portion of the bent portion 23 in (Case 2), the hydrogen concentration before the hydrogen diffusion analysis (*B in the figure) was higher than the hydrogen concentration at the equal equivalent plastic strain under a breakage judgment condition $\sigma$=980 MPa, and therefore, occurrence of breakage was judged, as illustrated in FIG. 13 (b-2). However, hydrogen concentration (*B in the drawing) after the hydrogen diffusion analysis was lower than the hydrogen concentration as the breakage judgment condition, and therefore, occurrence of no breakage was judged.

From these results of the judgment, it was predicted that the press formed part 21 has no occurrence of the delayed fracture in the surface (B-portion) of the bent portion 23 and has occurrence of the delayed fracture in the center portion in sheet thickness (A-portion) of the bent portion 23, in both (Case 1) and (Case 2). This result of the prediction preferably matched the position of the breakage in the delayed fracture test.

As described above, according to the present invention, it has been verified that a region where delayed fracture occurs, in a press formed part made of high strength steel sheet can be predicted.

[Second example]

In a second example, for the press formed part 21 illustrated in FIG. 9, the tentative press forming condition were changed so as not to cause delayed fracture to judge the presence or absence of the delayed fracture, and the press formed part was obtained by press forming under the press forming condition that does not cause the delayed fracture.

The press formed part 21 was obtained by press forming of the 1470 MPa-class cold rolled steel sheet (sheet thickness of 1.2 mm) as the high strength steel sheet, as in the first example. Then, the tentative press forming condition was set in which the bending R of the bent portion 23 giving concern about occurrence of delayed fracture in the first example, was changed from 5 mm to 7 mm. Stress in the A-portion (see FIG. 13(a)) of the bent portion 23 of the press formed part 21 obtained by press forming under the set tentative press forming condition decreased from 1120 MPa (bending R = 5 mm) to 1020 MPa (bending R = 7 mm). In addition, equivalent plastic strain in the A-portion of the bent portion 23 decreased from 0.023 (bending R = 5 mm) to 0.010 (bending R = 7 mm).

Furthermore, hydrogen concentration distribution in the press formed part 21 was set in the same manner as in (Case 1) and (Case 2) of the first example described above. Here, in (Case 1), hydrogen concentration corresponding to the equivalent plastic strain of each element in CAE analysis is set to each element in CAE analysis. Furthermore, in (Case 2), hydrogen concentration that is obtained by adding hydrogen concentration corresponding to hydrostatic stress calculated from stress, to hydrogen concentration corresponding to the equivalent plastic strain of each element in CAE analysis is set to each element in CAE analysis. For each of (Case 1) and (Case 2), hydrogen diffusion analysis was performed based on the stress and hydrogen concentration calculated for each element in CAE analysis for the press formed part 21 to calculate hydrogen concentration distribution after hydrogen diffusion.

As a result of obtaining the hydrogen concentrations in the A-portion of the bent portion 23 from the hydrogen concentration distributions calculated for (Case 1) and (Case 2), the hydrogen concentrations were 2.5 ppm and 2.7 ppm before hydrogen diffusion, and were 4.0 ppm and 4.3 ppm after hydrogen diffusion, respectively.

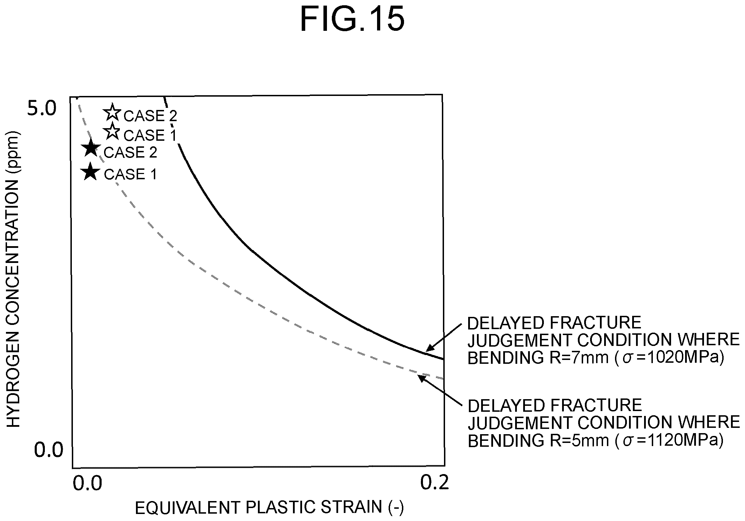

Subsequently, as in the first example described above (see FIG. 13), delayed fracture was judged using the stress, equivalent plastic strain, and hydrogen concentration after hydrogen diffusion, calculated for the A-portion of the bent portion 23. As a result, FIG. 15 illustrates the delayed fracture judgment condition ($\sigma$ = 1020 MPa and black solid line) where the bending R of the bent portion 23 is 7 mm, and the hydrogen concentrations (* in FIG. 15) of (Case 1) and (Case 2) after hydrogen diffusion analysis. Furthermore, FIG. 15 also illustrates, for comparison, the delayed fracture judgment condition ($\sigma$ = 1120 MPa and gray dashed line) where the bending R of the bent portion 23 of the first example is 5 mm, and the hydrogen concentrations (* in FIG. 15) of (Case 1) and (Case 2) after hydrogen diffusion analysis. As illustrated in FIG. 15, changing the bending R of the bent portion 23 from 5 mm to 7 mm relaxed the delayed fracture judgment condition, and further reduced the hydrogen concentration after the hydrogen diffusion analysis. Therefore, the hydrogen concentration (* in FIG. 15) after the hydrogen diffusion analysis where the bending R of the bent portion 23 is 7 mm was lower than the hydrogen concentration under the delayed fracture judgment condition ($\sigma$ = 1020 MPa) where the bending R is 7 mm in both (Case 1) and (Case 2), and no occurrence of delayed fracture was predicted. Therefore, the tentative press forming condition in which the bending R of the bent portion 23 has been changed to 7 mm was determined as the press forming condition. Furthermore, as a result of press forming of the press formed part 21 under the determined press forming condition, for performing the delayed fracture test, delayed fracture did not occur.

As described above, according to the method of manufacturing a press formed part according to the present invention, it has been verified that determination of the press forming condition through which delayed fracture does not occur in the high strength steel sheet and press forming under the determined press forming condition makes it possible to manufacture the press formed part for which measures against the occurrence of delayed fracture.

Industrial Applicability

According to the present invention, a method, device, and program for predicting delayed fracture in a press formed part that enable prediction of a region where delayed fracture occurs without performing a delayed fracture test for a press formed part formed by using a high strength steel sheet can be provided. Furthermore, according to the present invention, a method of manufacturing a press formed part to determine a press forming condition so as not to cause delayed fracture in a region where occurrence of the delayed fracture is predicted by the above method and manufacture the press formed part under the determined press forming condition.

Reference Signs List

1 DELAYED FRACTURE PREDICTION DEVICE
3 STRESS DISTRIBUTION AND STRAIN DISTRIBUTION CALCULATION UNIT
5 HYDROGEN CONCENTRATION DISTRIBUTION SETTING UNIT
7 HYDROGEN DIFFUSION ANALYSIS UNIT
9 DELAYED FRACTURE REGION PREDICTION UNIT
11 TENSILE TEST SPECIMEN
13 REDUCED SECTION
15 ROUNDED SECTION
21 PRESS FORMED PART
23 BENT PORTION
25 SHOULDER PORTION

**Claims**

1. A method for predicting delayed fracture in a press formed part, the method predicting a region where delayed fracture occurs in the press formed part made of high strength steel sheet, the method comprising:

   a stress distribution and strain distribution calculation step of calculating stress distribution and strain distribution in the press formed part;
   a hydrogen concentration distribution setting step of setting hydrogen concentration distribution corresponding to the strain distribution in the press formed part calculated in the stress distribution and strain distribution calculation step, based on a relation between strain and hydrogen concentration acquired in advance for the high strength steel sheet;
   a hydrogen diffusion analysis step of performing hydrogen diffusion analysis for the press formed part, based on the stress distribution calculated in the stress distribution and strain distribution calculation step and the hydrogen concentration distribution set in the hydrogen concentration distribution setting step, and calculating hydrogen concentration distribution after hydrogen diffusion; and
   a delayed fracture region prediction step of predicting the region where delayed fracture occurs in the press formed part, based on a delayed fracture judgment condition based on stress, strain, and hydrogen concentration acquired in advance, the stress distribution and strain distribution in the press formed part calculated in the stress distribution and strain distribution calculation step, and the hydrogen concentration distribution after hydrogen diffusion calculated in the hydrogen diffusion analysis step.

2. The method for predicting delayed fracture in a press formed part according to claim 1, wherein

   in the stress distribution and strain distribution calculation step, equivalent plastic strain distribution is calculated as the strain distribution, and
   in the hydrogen concentration distribution setting step, a relation between equivalent plastic strain and hydrogen concentration is acquired in advance, and hydrogen concentration distribution corresponding to the equivalent plastic strain distribution is set based on the acquired relation between equivalent plastic strain distribution and hydrogen concentration.

3. The method for predicting delayed fracture in a press formed part according to claim 1 or 2, wherein in the hydrogen concentration distribution setting step, a relation between hydrostatic stress and hydrogen concentration in the high strength steel sheet is acquired in advance, hydrostatic stress distribution is calculated from the stress distribution in the press formed part calculated in the stress distribution and strain distribution calculation step, hydrogen concentration distribution corresponding to the hydrostatic stress distribution is calculated based on the relation between hydrostatic stress and hydrogen concentration, and the calculated hydrogen concentration distribution corresponding to the hydrostatic stress distribution is added to the hydrogen concentration distribution corresponding to the strain distribution in the press formed part calculated in the stress distribution and strain distribution calculation step.

4. The method for predicting delayed fracture in a press formed part according to claim 1 or 2, wherein the high strength steel sheet has a tensile strength of 1 GPa or more.

5. The method for predicting delayed fracture in a press formed part according to claim 3, wherein the high strength steel sheet has a tensile strength of 1 GPa or more.

6. A device for predicting delayed fracture in a press formed part, the device predicting a region where delayed fracture occurs in the press formed part made of high strength steel sheet, the device comprising:

   a stress distribution and strain distribution calculation unit configured to calculate stress distribution and strain distribution in the press formed part;
   a hydrogen concentration distribution setting unit configured to set hydrogen concentration distribution corresponding to the strain distribution in the press formed part calculated by the stress distribution and strain distribution calculation unit, based on a relation between strain and hydrogen concentration acquired in advance for the high strength steel sheet;
   a hydrogen diffusion analysis unit configured to

      perform hydrogen diffusion analysis for the press formed part, based on the stress distribution calculated by the stress distribution and strain distribution calculation unit and the hydrogen concentration distribution set by the hydrogen concentration distribution setting unit, and
      calculate hydrogen concentration distribution after hydrogen diffusion; and

   a delayed fracture region prediction unit configured to predict the region where delayed fracture occurs in the press formed part, based on a delayed fracture judgment condition based on stress, strain, and hydrogen concentration acquired in advance, the stress distribution and strain distribution in the press formed part calculated by the stress distribution and strain distribution calculation unit, and the hydrogen concentration distribution after hydrogen diffusion calculated by the hydrogen diffusion analysis unit.

7. The device for predicting delayed fracture in a press formed part according to claim 6, wherein

   the stress distribution and strain distribution calculation unit is configured to calculate equivalent plastic strain distribution as the strain distribution, and
   the hydrogen concentration distribution setting unit is configured to acquire a relation between equivalent plastic strain and hydrogen concentration in advance, and set hydrogen concentration distribution corresponding to the equivalent plastic strain distribution based on the acquired relation between equivalent plastic strain distribution and hydrogen concentration.

8. The device for predicting delayed fracture in a press formed part according to claim 6 or 7, wherein the hydrogen concentration distribution setting unit is configured to acquire a relation between hydrostatic stress and hydrogen concentration in the high strength steel sheet in advance, hydrostatic stress distribution is calculated from the stress distribution in the press formed part calculated by the stress distribution and strain distribution calculation unit, hydrogen concentration distribution corresponding to the hydrostatic stress distribution is calculated based on the relation between hydrostatic stress and hydrogen concentration, and the calculated hydrogen concentration distribution corresponding to the hydrostatic stress distribution is added to the hydrogen concentration distribution corresponding to the strain distribution in the press formed part calculated by the stress distribution and strain distribution calculation unit.

9. A program for predicting delayed fracture in a press formed part, the program predicting a region where delayed fracture occurs in the press formed part made of high strength steel sheet, the program causing a computer to function as:

a stress distribution and strain distribution calculation unit configured to calculate stress distribution and strain distribution in the press formed part;

a hydrogen concentration distribution setting unit configured to set hydrogen concentration distribution corresponding to the strain distribution in the press formed part calculated by the stress distribution and strain distribution calculation unit, based on a relation between strain and hydrogen concentration acquired in advance for the high strength steel sheet;

a hydrogen diffusion analysis unit configured to

perform hydrogen diffusion analysis for the press formed part, based on the stress distribution calculated by the stress distribution and strain distribution calculation unit and the hydrogen concentration distribution set by the hydrogen concentration distribution setting unit, and

calculate hydrogen concentration distribution after hydrogen diffusion; and

a delayed fracture region prediction unit configured to predict the region where delayed fracture occurs in the press formed part, based on a delayed fracture judgment condition acquired in advance based on stress, strain, and hydrogen concentration, the stress distribution and strain distribution in the press formed part calculated by the stress distribution and strain distribution calculation unit, and the hydrogen concentration distribution after hydrogen diffusion calculated by the hydrogen diffusion analysis unit.

10. The program for predicting delayed fracture in a press formed part according to claim 9, wherein

the stress distribution and strain distribution calculation unit is configured to calculate equivalent plastic strain distribution as the strain distribution, and

the hydrogen concentration distribution setting unit is configured to acquire a relation between equivalent plastic strain and hydrogen concentration in advance, and set hydrogen concentration distribution corresponding to the equivalent plastic strain distribution based on the acquired relation between equivalent plastic strain distribution and hydrogen concentration.

11. The program for predicting delayed fracture in a press formed part according to claim 9 or 10, wherein the hydrogen concentration distribution setting unit is configured to acquire a relation between hydrostatic stress and hydrogen concentration in the high strength steel sheet in advance, hydrostatic stress distribution is calculated from the stress distribution in the press formed part calculated by the stress distribution and strain distribution calculation unit, hydrogen concentration distribution corresponding to the hydrostatic stress distribution is calculated based on the relation between hydrostatic stress and hydrogen concentration, and the calculated hydrogen concentration distribution corresponding to the hydrostatic stress distribution is added to the hydrogen concentration distribution corresponding to the strain distribution in the press formed part calculated by the stress distribution and strain distribution calculation unit.

12. A method of manufacturing a press formed part, the method suppressing occurrence of delayed fracture in the press formed part formed by using a high strength steel sheet to manufacture the press formed part, the method comprising:

a tentative press forming condition setting step of setting a tentative press forming condition for the press formed part;

a delayed fracture occurrence judgment step of predicting a region where delayed fracture occurs by the method for predicting delayed fracture in a press formed part according to claim 1, based on the tentative press forming condition, and judging presence or absence of occurrence of delayed fracture in the press formed part based on a result of the prediction;

a tentative press forming condition changing step of changing the tentative press forming condition when occurrence of the delayed fracture in the press formed part is judged in the delayed fracture occurrence judgment step;

a repeating step of repeatedly performing the tentative press forming condition changing step and the delayed fracture occurrence judgment step, until it is judged that there is no occurrence of delayed fracture in the press formed part in the delayed fracture occurrence judgment step;

a press forming condition determination step of determining the tentative press forming condition upon judgment of no occurrence of delayed fracture in the press formed part in the delayed fracture occurrence judgment step, as a press forming condition; and

a press forming step of performing press forming of the high strength steel sheet into the press formed part under the determined press forming condition.

# FIG.1

```
                    ┌─────────────┐
                    │    START    │
                    └──────┬──────┘
                           ↓
```

**STRESS DISTRIBUTION AND STRAIN DISTRIBUTION CALCULATION STEP**
CALCULATE STRESS AND STRAIN FOR EACH ELEMENT IN CAE ANALYSIS FOR PRESS FORMED PART BY PRESS FORMING CAE ANALYSIS OR SPRINGBACK CAE ANALYSIS — S1

**STRAIN-AND-HYDROGEN CONCENTRATION RELATION DERIVING STEP**
OBTAIN RELATION BETWEEN STRAIN AND HYDROGEN CONCENTRATION BY HYDROGEN CHARGING TEST — S11

**HYDROGEN CONCENTRATION DISTRIBUTION SETTING STEP**
SET HYDROGEN CONCENTRATION TO EACH ELEMENT IN CAE ANALYSIS FOR PRESS FORMED PART BASED ON RELATION BETWEEN STRAIN AND HYDROGEN CONCENTRATION EXPERIMENTALLY OBTAINED — S3

**HYDROGEN DIFFUSION ANALYSIS STEP**
PERFORM HYDROGEN DIFFUSION ANALYSIS TO CALCULATE HYDROGEN CONCENTRATION AFTER HYDROGEN DIFFUSION FOR EACH ELEMENT IN CAE ANALYSIS — S5

**DELAYED FRACTURE JUDGEMENT CONDITION DERIVING STEP**
OBTAIN STRESS, STRAIN, AND HYDROGEN CONCENTRATION THAT CAUSE DELAYED FRACTURE, BY DELAYED FRACTURE TEST — S13

**DELAYED FRACTURE REGION PREDICTION STEP**
COMPARE STRESS, STRAIN, AND HYDROGEN CONCENTRATION FOR EACH ELEMENT IN CAE ANALYSIS, WITH DELAYED FRACTURE JUDGEMENT CONDITIONS OBTAINED IN ADVANCE TO JUDGE WHETHER DELAYED FRACTURE IS CAUSED, AND PREDICT REGION WHERE DELAYED FRACTURE OCCURS — S7

```
                    ┌─────────────┐
                    │     END     │
                    └─────────────┘
```

FIG.2

(a) TENSILE TEST SPECIMEN

(b) REGION WHERE DELAYED FRACTURE OCCURS

(c) HYDROGEN CONCENTRATION DISTRIBUTION

# FIG.3

$$C_\varepsilon = 0.52 \ln(\varepsilon_p^{eq}) + 3.9$$

(a) RELATIONSHIP BETWEEN
EQUIVALENT PLASTIC STRAIN AND
HYDROGEN CONCENTRATION

(b) RELATIONSHIP BETWEEN
STRAIN MODE AND
HYDROGEN CONCENTRATION

EP 4 478 026 A1

FIG.4

$$C_p = C_0 \exp\left(\frac{pV_H}{3RT}\right)$$

EP 4 478 026 A1

# FIG.5

(a) IMMERSION TIME OF 30 HOURS

(b) IMMERSION TIME OF 20 HOURS

EP 4 478 026 A1

# FIG.6

FIG.6

# FIG.7

OCCURRENCE OF
DELAYED FRACTURE
UNDER STRESS OF 900MPa

σ=1100MPa   1000MPa   900MPa

5.0

0.0

HYDROGEN CONCENTRATION (ppm)

0.0                     0.2

EQUIVALENT PLASTIC STRAIN (-)

# FIG.8

```
┌─────────────────────────────────────────────────────┐ ～ 1
│                                                      │
│  ┌────────────────────────────────────────────┐      │
│  │   STRESS DISTRIBUTION AND STRAIN           │─────── 3
│  │   DISTRIBUTION CALCULATION UNIT            │      │
│  └────────────────────────────────────────────┘      │
│                                                      │
│  ┌────────────────────────────────────────────┐      │
│  │  HYDROGEN CONCENTRATION DISTRIBUTION       │─────── 5
│  │             SETTING UNIT                   │      │
│  └────────────────────────────────────────────┘      │
│                                                      │
│  ┌────────────────────────────────────────────┐      │
│  │    HYDROGEN DIFFUSION ANALYSIS UNIT        │─────── 7
│  └────────────────────────────────────────────┘      │
│                                                      │
│  ┌────────────────────────────────────────────┐      │
│  │  DELAYED FRACTURE REGION PREDICTION        │─────── 9
│  │                UNIT                        │      │
│  └────────────────────────────────────────────┘      │
│                                                      │
└─────────────────────────────────────────────────────┘
```

EP 4 478 026 A1

# FIG.9

(a) PERSPECTIVE VIEW

(b) CROSS-SECTIONAL VIEW

# FIG.10

(a) LONGITUDINAL STRESS DISTRIBUTION

(b) EQUIVALENT PLASTIC STRAIN DISTRIBUTION

EP 4 478 026 A1

# FIG.11

(ppm)
2.8

0

(a) HYDROGEN CONCENTRATION DISTRIBUTION
BEFORE HYDROGEN DIFFUSION
(HYDROGEN CONCENTRATION DISTRIBUTION CORRESPONDING
TO EQUIVALENT PLASTIC STRAIN, CASE 1)

(ppm)
2.8

0

(b) HYDROGEN CONCENTRATION DISTRIBUTION
BEFORE HYDROGEN DIFFUSION
(HYDROGEN CONCENTRATION DISTRIBUTION
CORRESPONDING TO HYDROSTATIC STRESS)

(ppm)
3.3

0

(c) HYDROGEN CONCENTRATION DISTRIBUTION
BEFORE HYDROGEN DIFFUSION
(HYDROGEN CONCENTRATION DISTRIBUTION
CORRESPONDING TO HYDROSTATIC STRESS AND
EQUIVALENT PLASTIC STRAIN, CASE 2)

# FIG.12

(a) HYDROGEN CONCENTRATION
DISTRIBUTION AFTER HYDROGEN DIFFUSION
(HYDROGEN CONCENTRATION DISTRIBUTION CORRESPONDING
TO EQUIVALENT PLASTIC STRAIN, CASE 1)

(b) HYDROGEN CONCENTRATION DISTRIBUTION
AFTER HYDROGEN DIFFUSION
(HYDROGEN CONCENTRATION DISTRIBUTION
CORRESPONDING TO HYDROSTATIC STRESS AND
EQUIVALENT PLASTIC STRAIN, CASE 2)

# FIG.13

(a) REGION FOR WHICH
DELAYED FRACTURE IS
JUDGED

21

23

23

A-PORTION
(CENTER PORTION IN
SHEET THICKNESS)

B-PORTION
(SURFACE)

(b) DELAYED FRACTURE
JUDGEMENT

(b-1) CASE 1

σ=1120MPa   980MPa   900MPa

HYDROGEN
CONCENTRATION (ppm)

EQUIVALENT PLASTIC STRAIN (-)

HYDROGEN
DIFFUSION

★A
☆A
★B
☆B

DELAYED FRACTURE
JUDGEMENT
CONDITION IN
B-PORTION
(σ=980MPa)

DELAYED FRACTURE
JUDGEMENT
CONDITION IN
A-PORTION
(σ=1120MPa)

(b-2) CASE 2

σ=1120MPa   980MPa   900MPa

HYDROGEN
CONCENTRATION (ppm)

EQUIVALENT PLASTIC STRAIN (-)

AFTER
THIRD
STEP

★A
☆A
★B
☆B

DELAYED FRACTURE
JUDGEMENT
CONDITION IN
B-PORTION
(σ=980MPa)

DELAYED FRACTURE
JUDGEMENT
CONDITION IN
A-PORTION
(σ=1120MPa)

FIG.14

START

TENTATIVE PRESS FORMING CONDITION SETTING STEP — S21

REPEATING STEP — S27

DELAYED FRACTURE OCCURRENCE JUDGEMENT STEP — S23

STRESS DISTRIBUTION AND STRAIN DISTRIBUTION CALCULATION STEP — S1

HYDROGEN CONCENTRATION DISTRIBUTION SETTING STEP — S3

HYDROGEN DIFFUSION ANALYSIS STEP — S5

DELAYED FRACTURE REGION PREDICTION STEP — S7

OCCURRENCE OF DELAYED FRACTURE? — S23a

YES

NO

TENTATIVE PRESS FORMING CONDITION CHANGING STEP — S25

PRESS FORMING CONDITION DETERMINATION STEP — S29

PRESS FORMING STEP — S31

END

EP 4 478 026 A1

# FIG.15

## INTERNATIONAL SEARCH REPORT

| International application No. |
|---|
| **PCT/JP2022/046835** |

**A.    CLASSIFICATION OF SUBJECT MATTER**

    *G01N 3/28*(2006.01)i; *B21D 22/00*(2006.01)i; *G01N 3/08*(2006.01)i; *G01N 17/00*(2006.01)i
    FI:    G01N3/28; G01N3/08; B21D22/00; G01N17/00

According to International Patent Classification (IPC) or to both national classification and IPC

**B.    FIELDS SEARCHED**

Minimum documentation searched (classification system followed by classification symbols)

    G01N3/28; B21D22/00; G01N3/08; G01N17/00

Documentation searched other than minimum documentation to the extent that such documents are included in the fields searched

    Published examined utility model applications of Japan 1922-1996
    Published unexamined utility model applications of Japan 1971-2023
    Registered utility model specifications of Japan 1996-2023
    Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
|---|---|---|
| A | JP 2011-33600 A (KOBE STEEL LTD) 17 February 2011 (2011-02-17)<br>    entire text, all drawings | 1-12 |
| A | JP 2017-187441 A (JFE STEEL CORP) 12 October 2017 (2017-10-12)<br>    entire text, all drawings | 1-12 |
| A | JP 2006-29977 A (JFE STEEL CORP) 02 February 2006 (2006-02-02)<br>    entire text, all drawings | 1-12 |
| A | JP 2013-127104 A (KOBE STEEL LTD) 27 June 2013 (2013-06-27)<br>    entire text, all drawings | 1-12 |
| A | KR 10-2021-0120704 A (POSCO) 07 October 2021 (2021-10-07)<br>    entire text, all drawings | 1-12 |
| P, A | JP 7140302 B1 (JFE STEEL CORP) 21 September 2022 (2022-09-21)<br>    entire text, all drawings | 1-12 |

☐ Further documents are listed in the continuation of Box C.    ☑ See patent family annex.

| | |
|---|---|
| *    Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed | "T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family |

| Date of the actual completion of the international search | Date of mailing of the international search report |
|---|---|
| **17 February 2023** | **07 March 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

PCT/JP2022/046835

| Patent document cited in search report | | | Publication date (day/month/year) | Patent family member(s) | Publication date (day/month/year) |
|---|---|---|---|---|---|
| JP | 2011-33600 | A | 17 February 2011 | (Family: none) | |
| JP | 2017-187441 | A | 12 October 2017 | (Family: none) | |
| JP | 2006-29977 | A | 02 February 2006 | (Family: none) | |
| JP | 2013-127104 | A | 27 June 2013 | (Family: none) | |
| KR | 10-2021-0120704 | A | 07 October 2021 | (Family: none) | |
| JP | 7140302 | B1 | 21 September 2022 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019174124 A
- JP 2020041838 A
- JP 2011033600 A